(19) Europäisches Patentamt
European Patent Office
Office européen des brevets

(11) EP 4 618 289 A1

(12) **EUROPEAN PATENT APPLICATION**
published in accordance with Art. 153(4) EPC

(43) Date of publication:
**17.09.2025 Bulletin 2025/38**

(21) Application number: **23923277.0**

(22) Date of filing: **21.02.2023**

(51) International Patent Classification (IPC):
***H01M 50/409*** *(2021.01)* ***H01M 10/0525*** *(2010.01)*

(52) Cooperative Patent Classification (CPC):
**H01M 10/05; H01M 10/0525; H01M 50/403; H01M 50/409; H01M 50/411; H01M 50/446;**
Y02E 60/10

(86) International application number:
**PCT/CN2023/077454**

(87) International publication number:
**WO 2024/174093 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **XU, Ming**
  **Ningde, Fujian 352100 (CN)**
- **YANG, Jianrui**
  **Ningde, Fujian 352100 (CN)**
- **WEI, Manxiang**
  **Ningde, Fujian 352100 (CN)**

(74) Representative: **Gong, Jinping**
**CocreateIP**
**Neumarkter Straße 21**
**81673 München (DE)**

(54) **SEPARATOR, PREPARATION METHOD THEREFOR, AND SECONDARY BATTERY AND POWERED DEVICE RELATED THERETO**

(57) The present application provides a separator, a method for preparing the same, a secondary battery and an electrical device related thereto. The separator comprises a porous substrate and a coating layer disposed on at least one surface of the porous substrate, wherein the coating layer comprises a three-dimensional skeleton structure and organic silicon particles, and at least a portion of the organic silicon particles are filled into the three-dimensional skeleton structure.

5

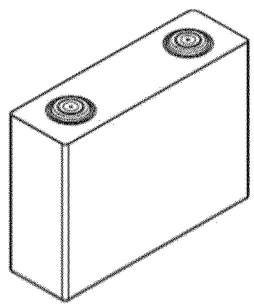

Fig. 1

EP 4 618 289 A1

## Description

### TECHNICAL FIELD

The present application relates to a separator, a method for preparing the same, and a secondary battery and electrical device related thereto.

### BACKGROUND

In recent years, secondary batteries have been widely used in energy storage power systems such as hydraulic, thermal, wind and solar power plants, as well as in many fields such as electric tools, electric bicycles, electric motorcycles, electric vehicles, military equipment, and aerospace. With the application and promotion of secondary batteries, the requirements for their reliability are becoming increasingly stringent. How to continuously improve the reliability of secondary batteries without affecting other performance aspects remains an urgent issue for technical personnel in this field.

### SUMMARY

The present application is to provide a separator, a method for preparing the same, and secondary batteries and electrical devices related thereto, which may make the secondary batteries achieve a high energy density, a high thermal stability, a long cycle life, and a good dynamic performance.

In one aspect of the present application, there is provided a separator comprising a porous substrate and a coating layer disposed on at least one surface of the porous substrate, wherein the coating layer comprises a three-dimensional skeleton structure and organic silicon particles, and at least a portion of the organic silicon particles are filled into the three-dimensional skeleton structure.

By providing a coating layer comprising a three-dimensional skeleton structure and organic silicon particles on the surface of a porous substrate of the separator, and filling at least a portion of the organic silicon particles into the three-dimensional skeleton structure, it is possible to make the separator have a high heat resistance, a high adhesion, and a high ionic conductivity, and further to make the secondary batteries achieve a high energy density, a high thermal stability, a long cycle life, and a good dynamic performance.

In some embodiments of the present application, the separator satisfies $0 < D_1/(d_1/\sqrt{6}) \leq 1$ and $0 < d_1/(L_1/\sqrt{2}) \leq 1$ in which a volume distribution particle size Dv50 of the organic silicon particles is denoted as d1, in nm, an average diameter of materials that constitute the three-dimensional skeleton structure is denoted as D1, in nm, and an average length of materials that constitute the three-dimensional skeleton structure is denoted as L1, in nm.

By adjusting $D_1/(d_1/\sqrt{6})$ and $d_1/(L_1/\sqrt{2})$ within the above range, it is beneficial for the organic silicon particles and the three-dimensional skeleton structure to cooperate with each other and form an integration effect, enabling the coating layer to have a more stable spatial network structure, thereby further enhancing the heat resistance, adhesion, and ionic conductivity of the separator, as well as the thermal stability, cycle performance, and dynamic performance of the secondary batteries.

In some embodiments of the present application, $0.04 \leq D_1/(d_1/\sqrt{6}) \leq 0.85$, optionally, 0.05 $0.05 \leq D_1/(d_1/\sqrt{6}) \leq 0.65$.

In some embodiments of the present application, $0.04 \leq d_1/(L_1/\sqrt{2}) \leq 0.9$, optionally, $0.08 \leq d_1/(L_1/\sqrt{2}) \leq 0.8$.

As a result, it is possible to further improve the heat resistance, adhesion, and ionic conductivity of the separator, as well as the thermal stability, cycle performance, and dynamic performance of the secondary batteries.

In some embodiments of the present application, a volume distribution particle size Dv50 of the organic silicon particles, is denoted as di, and di is less than or equal to 2000nm, optionally from 275 to 1500nm. The organic silicon particles having a smaller volume distribution particle size Dv50 is beneficial for being filled into the three-dimensional skeleton structure to produce an embedding effect, thereby increasing the heat resistance, adhesion, and ionic conductivity of the separator.

In some embodiments of the present application, an average diameter of the material that constitutes the three-dimensional skeleton structure is denoted as Di, and Di is less than or equal to 50nm, optionally from 10 to 42nm. When the average diameter of the material that constitutes the three-dimensional skeleton structure is within the above range, it is possible to further enhance the ionic conductivity and voltage breakdown resistance of the separator, while helping to form an integration effect with the organic silicon particles, thereby further enhancing the heat resistance of the separator.

In some embodiments of the present application, an average length of the material that constitutes the three-dimensional skeleton structure is denoted as $L_1$, and Li is from 100 to 3500nm, optionally from 400 to 3000nm. When the average length of the material that constitutes the three-dimensional skeleton structure is within the above range, it is possible to further enhance the heat resistance and ionic conductivity of the separator.

In some embodiments of the present application, the organic silicon particles are in the morphology of spherical and/or spheroid.

In some embodiments of the present application, the organic silicon particles have a volume distribution particle size Dv90 of less than or equal to 3500nm, optionally from 800 to 2500nm. The organic silicon particles having a smaller volume distribution particle size Dv90 is beneficial for forming a uniform coating layer.

In some embodiments of the present application, the organic silicon particles have a specific surface area, denoted as S, in $m^2/g$, ranging from 5.0 $m^2/g$ to 12.0 $m^2/g$, optionally ranging from 6.0 m2/g to 10.0 $m^2/g$. When the specific surface area of the organic silicon particles is within the aforementioned range, it is beneficial for the organic silicon particles cooperate with each other well, making it easier for the particles to form a porous structure among themselves, which is conducive to migration of active ions.

In some embodiments of the present application, the organic silicon particles have a true density ranging from 1.0 $g/cm^3$ to 2.0 $g/cm^3$, optionally ranging from 1.2 $g/cm^3$ to 1.7 $g/cm^3$. When the true density of the organic silicon particles is within the aforementioned range, the compaction density and packing density of the material increase, which helps to enhance the heat resistance of the separator and also helps to reduce coating layer leakage.

In some embodiments of the present application, the organic silicon particles have a powder compaction density under 30000N ranging from 0.3 $g/cm^3$ to 1.5 $g/cm^3$, optionally ranging from 0.5 $g/cm^3$ to 1.0 $g/cm^3$.

When the powder compaction density of the organic silicon particles is within the aforementioned range, the compaction density and packing density of the material increase, which helps to enhance the heat resistance of the separator and also helps to reduce coating leakage.

In some embodiments of the present application, the organic silicon particles have a number-average molecular weight ranging from 20000 to 80000, optionally ranging from 30000 to 50000. When the number-average molecular weight of the organic silicon particles is within the aforementioned range, it is favorable for forming organic silicon particles having a smaller particle size, which may achieve a thin and light coating application, reducing the overall thickness of the separator, thereby facilitating an increase in the energy density of the secondary batteries.

In some embodiments of the present application, the organic silicon particles is present in a content of greater than or equal to 50 wt%, optionally from 50% to 90%, based on a total weight of the coating layer. When the content of the organic silicon particles is within the aforementioned range, it is possible to further improve the overall adhesion, stability, anti-swelling properties, and heat resistance of the separator.

In some embodiments of the present application, the three-dimensional skeleton structure is present in an amount of less than 50 wt%, optionally from 8% to 48%, based on a total weight of the coating layer.

In any embodiment of the present application, the organic silicon particles comprise a first structural unit as shown in Formula (I):

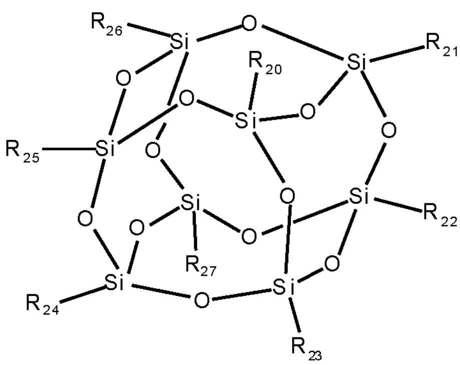

Formula (I);

in which Formula (I), $R_{20}$ to $R_{27}$ each independently comprise one or more of a substituted or unsubstituted C1 to C10 alkyl group, and a structural unit as shown in Formula (I-1), with the proviso that at least one of $R_{20}$ to $R_{27}$ comprises the structural unit shown in Formula (I-1),

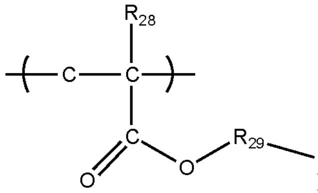
Formula (I-1);

in which Formula (I-1), $R_{28}$ comprises one or more of a hydrogen atom, and a substituted or unsubstituted C1 to C5 alkyl group; optionally, $R_{28}$ comprises a hydrogen atom, or a substituted or unsubstituted C1 to C3 alkyl group; $R_{29}$ comprises a substituted or unsubstituted C1 to C10 alkyl group; optionally, $R_{29}$ comprises a substituted or unsubstituted C3 to C10 alkyl group.

In some embodiments of the present application, the organic silicon particles further comprises a second structural unit and/or a third structural unit.

The second structural unit has a structure as shown in Formula (II):

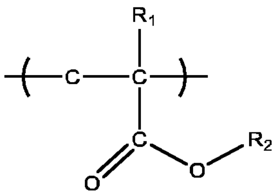
Formula (II);

in which Formula (II), $R_1$ comprises one or more of a hydrogen atom, and a substituted or unsubstituted C1 to C5 alkyl group; optionally, $R_1$ comprises one or more of a hydrogen atom, and a substituted or unsubstituted C1 to C3 alkyl group; $R_2$ comprises one or more of a substituted or unsubstituted C1 to C20 alkyl group, a substituted or unsubstituted C3 to C20 cycloalkyl group, and a substituted or unsubstituted C1 to C20 hydroxyalkyl group; optionally, $R_2$ comprises one or more of a C1 to C12 alkyl group, a C3 to C12 cycloalkyl group, and a C1 to C12 hydroxyalkyl group.

The third structural unit is as shown in Formula (III):

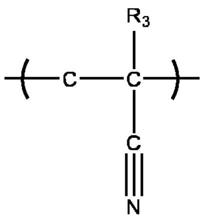
Formula (III);

in which Formula (III), $R_3$ comprises one or more of a hydrogen atom, and a substituted or unsubstituted C1 to C5 alkyl group; optionally, $R_3$ comprises one or more of a hydrogen atom, and a substituted or unsubstituted C1 to C3 alkyl group.

In some embodiments of the present application, based on a total molar amount of the first structural unit, the second structural unit, and the third structural unit, the first structural unit is present in a molar percentage, denoted as A%, of $0 < A \leq 20$; optionally, of $5 \leq A \leq 20$. When the molar percentage of the first structural unit is within the aforementioned range, it is possible to enhance the heat resistance of the organic silicon particles, and it is beneficial for increasing the proportion of the second and third structural units due to its relatively low proportion, thereby improving the overall adhesion, stability, and anti-swelling properties of the organic silicon particles.

In some embodiments of the present application, based on a total molar amount of the first structural unit, the second structural unit, and the third structural unit, the second structural unit is present in a molar percentage, denoted as B%, of $60 \leq B < 100$; optionally, of $60 \leq B \leq 80$. When the molar percentage of the second structural unit is within the aforementioned range, it is possible to improve flexibility of the organic silicon particles due to its relatively high proportion in the organic silicon particles, thereby significantly enhancing adhesion of the organic silicon particles; when the organic silicon particles are applied to separators, it is possible to improve the binding force between the organic silicon particles and the substrate of the separator.

In some embodiments of the present application, based on a total molar amount of the first structural unit, the second structural unit, and the third structural unit, the third structural unit is present in a molar percentage, denoted as C%, of $0 < C \leq 20$; optionally, of $5 \leq C \leq 20$. When the molar percentage of the third structural unit is within the aforementioned range, it is possible to significantly improve the stability of the organic silicon particles.

In some embodiments of the present application, the organic silicon particles satisfy at least one of the following conditions (1) to (3): (1) $3 \leq B/C \leq 16$; (2) $3 \leq B/A \leq 16$; (3) B:C:A is (12 to 16):(1 to 4):(1 to 4) in which a molar percentage of the first structural unit is denoted as A%, a molar percentage of the second structural unit is denoted as B%, a molar percentage of the third structural unit is denoted as C%, based on a total molar amount of the first structural unit, the second structural unit, and the third structural unit.

When the molar percentages of the first, second, and third structural units meet the aforementioned ratios, the three structural units in the organic silicon particles work together synergistically to improve the adhesion, stability, anti-swelling, and thermal stability of the organic silicon particles.

In some embodiments of the present application, the organic silicon particles comprise a structural unit shown in formula (a):

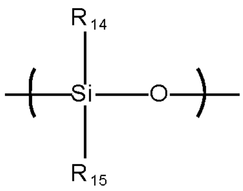

Formula (a);

in which Formula (a), $R_{14}$ and $R_{15}$ are each independently at least one selected from a hydrogen atom, a substituted or unsubstituted C1 to C10 alkyl group, a hydroxyl group, and an amino group; optionally, $R_{14}$ and $R_{15}$ are each independently at least one selected from a hydrogen atom, a substituted or unsubstituted C1 to C6 alkyl group, a hydroxyl group, and an amino group.

Optionally, the organic silicon particles comprise one or more of polymethylsiloxane, polydimethylsiloxane, polydiethylsiloxane, polymethylhydroxysiloxane, polymethylaminosiloxane, and their respective derivatives.

In some embodiments of the present application, the material that constitutes the three-dimensional skeleton structure comprise at least one of filaments, rods, tubes, or bars.

In some embodiments of the present application, the material that constitutes the three-dimensional skeleton structure have an aspect ratio of 5 to 150, optionally of 20 to 100. When the aspect ratio of the material that constitutes the three-dimensional skeleton structure is within the aforementioned range, it is possible to further enhance the ion conductivity of the separator and the infiltration and retention characteristics of the separator to an electrolytic solution.

In some embodiments of the present application, the material that constitutes the three-dimensional skeleton structure comprise at least one of organic materials or inorganic materials.

In some embodiments of the present application, the organic materials comprise at least one of nanocellulose, polytetrafluoroethylene nanofibers, or polyamide nanofibers; optionally, the nanocellulose comprises at least one of cellulose nanofibers, cellulose nanocrystals, or bacterial nanocellulose.

In some embodiments of the present application, the inorganic materials comprise at least one of halloysite nanotubes, nanorod-shaped alumina, nanorod-shaped boehmite, nanorod-shaped silica, or glass fibers.

In some embodiments of the present application, the material that constitutes the three-dimensional skeleton structure comprise nanocellulose, and the nanocellulose comprises at least one of unmodified nanocellulose or modified nanocellulose.

In some embodiments of the present application, the modified nanocellulose comprises a modifying group, and the modifying group comprises at least one of an amino group, a carboxyl group, an aldehyde group, a sulfonic acid group, a boric acid group, or a phosphoric acid group; optionally, at least one of a sulfonic acid group, a boric acid group, or a phosphoric acid group.

In some embodiments of the present application, the modified nanocellulose comprises a hydroxyl group and a modifying group, and a molar ratio of the modifying group to the hydroxyl group is from 1:4 to 4:1, optionally from 2:3 to 7:3. When the molar ratio of the modifying group to the hydroxyl group is within the aforementioned range, it is possible to further enhance the heat resistance and ion conductivity of the separator, and the infiltration and retention characteristics of the separator to an electrolytic solution.

In some embodiments of the present application, the material that constitutes the three-dimensional skeleton structure comprise a sulfonic acid group, and the material that constitutes the three-dimensional skeleton structure have an elemental sulfur present in a content of ≥0.1wt%, optionally from 0.2 to 0.5wt%, based on the total weight of the material that constitutes the three-dimensional skeleton structure.

In some embodiments of the present application, the coating layer further comprises a non-granular binder.

In some embodiments of the present application, the non-granular binder is present in the coating layer in a content of ≤5wt%, based on the total weight of the coating layer.

In some embodiments of the present application, the non-granular binder comprises at least one of polyacrylonitrile, acrylic resins, acrylates resins, polyvinyl alcohol, isobutylene-maleic anhydride copolymers, polyacrylamide,

sodium carboxymethyl cellulose, carboxymethyl chitosan, sodium alginate, or their respective derivatives.

In some embodiments of the present application, the porous substrate has a thickness of ≤6μm, optionally from 3 to 5μm.

In some embodiments of the present application, the coating layer has a thickness of ≤4μm, optionally from 0.4 to 3 μm.

In some embodiments of the present application, the separator has a longitudinal thermal shrinkage rate at 150°Cfor 1h of ≤4.5%, optionally from 0.8% to 3%.

In some embodiments of the present application, the separator has a traverse thermal shrinkage rate at 150°C for 1h of ≤4.5%, optionally from 1% to 3%.

In some embodiments of the present application, the separator has a longitudinal tensile strength of ≥1600kg/$cm^2$, optionally from 1800 to 4500kg/$cm^2$.

In some embodiments of the present application, the separator has a traverse tensile strength of ≥1600kg/$cm^2$, optionally from 1800 to 4500kg/$cm^2$.

In some embodiments of the present application, the separator has an infiltration length of ≥20mm, optionally from 30 to 80mm.

In any embodiment of the present application, the separator has an infiltration speed of ≥2mm/s, optionally from 3 to 10mm/s.

In any embodiment of the present application, the separator has an air permeability of ≤350s/100mL, optionally from 100 to 270s/100mL.

In any embodiment of the present application, the separator has an ionic conductivity of ≥0.5mS/cm, optionally from 0.55 to 0.98mS/cm.

A second aspect of the present application provides a method for preparing the separator according to the first aspect of the present application, including the steps of: providing a porous substrate; formulating a coating slurry by blending organic silicon particles with a binder to obtain a mixture and then adding to the mixture materials that constitute the three-dimensional skeleton structure and a solvent and mixing them homogenously; and applying the coating slurry to at least one surface of the porous substrate followed by drying to obtain the separator, wherein the separator comprises a porous substrate and a coating layer disposed on at least one surface of the porous substrate, and the coating layer comprises a three-dimensional skeleton structure and organic silicon particles, and at least a portion of the organic silicon particles are filled into the three-dimensional skeleton structure.

A third aspect of the present application provides a secondary battery, comprising the separator of the first aspect of the present application or the separator prepared by the method of the second aspect of the present application.

A fourth aspect of the present application provides an electrical device, comprising the secondary battery according to the third aspect of the present application.

The electrical device of the present application comprises the secondary battery provided by the present application, and thus has at least the same advantages as the secondary battery.

## DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art may obtain other drawings based on these drawings without creative work.

Fig. 1 is a schematic diagram of an embodiment of a secondary battery of the present application.
Fig. 2 is an exploded schematic diagram of the embodiment of the secondary battery as shown in Fig. 1.
Fig. 3 is a schematic diagram of a battery module according to an embodiment of the present application.
Fig. 4 is a schematic diagram of a battery pack according to an embodiment of the present application.
Fig. 5 is an exploded schematic diagram of the embodiment of the battery pack as shown in Fig. 4.
Fig. 6 is a schematic diagram of an embodiment of an electrical device of the present application as a powder supply.

In the drawings, the drawings are not necessarily drawn to scale. The reference numerals are defined as follows: 1-battery pack; 2- upper case body; 3-lower case body; 4-battery module; 5-secondary battery; 51-housing; 52-electrode assembly; and 53-cover.

## DETAILED DESCRIPTION

Hereafter, embodiments of the separator, the preparation method therefor and the secondary battery and electrical device related thereto of the present application will be specifically described in detail with appropriate

references to the accompanying drawings. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following description are provided for those skilled in the art to fully understand the present application, and are not intended to limit the subject matter described in the claims.

A "range" disclosed herein is defined in terms of lower and upper limits, and a given range is defined by selecting a lower limit and an upper limit that define the boundaries of the particular range. Ranges defined in this manner may be inclusive or exclusive of end values and may be combined arbitrarily, that is, any lower limit may be combined with any upper limit to form a range. For example, if ranges of 60-120 and 80-110 are listed for a particular parameter, it is to be understood that ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application may be combined with each other to form a new technical solution, and such a technical solution should be considered to be included in the disclosure of the present application.

Unless stated otherwise, all technical features and optional technical features of the present application may be combined with each other to form a new technical solution, and such a technical solutions should be considered to be included in the disclosure of the present application.

Unless stated otherwise, all steps of the present application may be carried out sequentially, and also may be carried out randomly, preferably they are carried out sequentially. For example, the method includes steps (a) and (b), indicating that the method may comprise steps (a) and (b) performed in sequence, or that the method may comprise steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprising" and "including" mentioned in the present application means that it is drafted in an open mode or in a close mode. For example, the transition phases "comprising" and "including" may mean that other components not listed may also be included or contained, or only the listed components may be included or contained.

In the present application herein, unless otherwise stated, the term "or" is inclusive. For example, the phrase "A or B" means "A, B, or both A and B." More specifically, any of the following conditions satisfy the condition "A or B": A is true (or exists) and B is false (or does not exist), A is false (or does not exist) and B is true (or exists); or both A and B are true (or exist).

In the present application herein, unless stated otherwise, the terms "first", "second", "third", and the like are merely for the purpose of distinguishing different objects and shall not be understood as any indication or implication of a specific sequence of relative importance.

In the present application, the term "a plurality of" means two or more than two and the term "a plurality of types" means two types or more than two types.

Unless otherwise specified, the terms used in the present application are common general knowledge by the person skilled in the art.

Unless otherwise specified, numerical values of parameters mentioned in the present application may be measured by using various measurement methods commonly used in the art, for example, they may be measured by using the methods provided in the embodiments of this application. Unless otherwise specified, the test is carried out at a temperature of 25°C.

The term "alkyl group" covers linear alkyl group and branched alkyl group. For example, the alkyl group may be C1-C50 alkyl, C1-C40 alkyl, C1-C30 alkyl, C1-C20 alkyl, C1-C12 alkyl, C1-C10 alkyl, C1-C6 alkyl, C1-C5 alkyl, or C1-C3 alkyl. In some embodiments, the alkyl group includes methyl, ethyl, propyl, isopropyl, butyl, isobutyl, tert-butyl, pentyl, hexyl, heptyl, octyl, and the like. In addition, the alkyl may be optionally substituted.

The term "cycloalkyl" refers to a cyclic structure composed of three or more carbon atoms. For example, the cycloalkyl may be C3-C50 cycloalkyl, C3-C40 cycloalkyl, C3-C30 cycloalkyl, C3-C20 cycloalkyl, C3-C12 cycloalkyl, C3-C10 cycloalkyl, C3-C6 cycloalkyl, or C3-C4 cycloalkyl. In some embodiments, the cycloalkyl includes cyclopropyl, cycloisopropyl, cyclobutyl, cycloisobutyl, cyclotert-butyl, cyclopentyl, cyclohexyl, cycloheptyl, cyclooctyl, and the like. In addition, the cycloalkyl may be optionally substituted.

The term "hydroxyalkyl" refers to alkyl in which one hydrogen atom is replaced by hydroxyl. For example, the

hydroxyalkyl may be C1-C50 hydroxyalkyl, C1-C40 hydroxyalkyl, C1-C30 hydroxyalkyl, C1-C20 hydroxyalkyl, C1-C12 hydroxyalkyl, C1-C10 hydroxyalkyl, C1-C6 hydroxyalkyl, C1-C5 hydroxyalkyl, or C1-C3 hydroxyalkyl. In some embodiments, the hydroxyalkyl comprises hydroxymethyl, hydroxyethyl, hydroxypropyl, hydroxyisopropyl, hydroxybutyl, hydroxyisobutyl, hydroxyt-butyl, hydroxypentyl, hydroxyhexyl, hydroxyheptyl, hydroxyoctyl, and the like. In addition, the hydroxyalkyl may be optionally substituted.

The term "hydrogen" refers to $^1H$ (protium, H), $^2H$ (deuterium, D), or $^3H$ (tritium, T). In various embodiments, "hydrogen" may be $^1H$ (protium, H).

Throughout this specification, substituents of compounds are disclosed in groups or ranges. It is explicitly contemplated that such descriptions comprise every individual sub combination of members of these groups and ranges. For example, it is explicitly contemplated that the term "C1-C8 alkyl" individually discloses C1, C2, C3, C4, C5, C6, C7, C8, C1-C8, C1-C7, C1-C6, C1-C5, C1-C4, C1-C3, C1-C2, C2-C8, C2-C7, C2-C6, C2-C5, C2-C4, C2-C3, C3-C8, C3-C7, C3-C6, C3-C5, C3-C4, C4-C8, C4-C7, C4-C6, C4-C5, C5-C8, C5-C7, C5-C6, C6-C8, C6-C7, and C7-C8 alkyl. As other examples, it is explicitly contemplated that ranges of integers from 5 to 40 individually disclose 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40; and ranges of integers from 1 to 20 individually disclose 1, 2, 3, 4, 5, 6, 7, 8, 9, 10, 11, 12, 13, 14, 15, 16, 17, 18, 19, and 20. Accordingly, other groups or ranges may be explicitly contemplated.

When the above groups such as alkyl, cycloalkyl, hydroxyalkyl and the like are substituted, the substituents may be halogen atoms or heteroatoms.

The term "halogen atoms" refers to fluorine atoms, chlorine atoms, bromine atoms, and the like.

The term "heteroatoms" refers to nitrogen atoms, sulfur atoms, phosphorus atoms, and the like.

Typically, a secondary battery comprises an electrode assembly and an electrolyte, where the electrode assembly comprise a positive electrode plate, a negative electrode plate, and a separator, the separator being disposed between the positive and negative electrode plates, which mainly prevents short circuit between the positive and negative electrodes while allowing active ions to pass through to form a loop.

With the application and promotion of secondary batteries, there is an increasing demand for performances for example reliability of secondary batteries. The separator is an important part of the secondary batteries, and its performance may be improved to enhance the reliability of the secondary batteries. Currently, commercially available secondary batteries typically use a polyolefin porous membrane as a separator, which has poor heat resistance. When heated, the polyolefin porous membrane undergoes significant thermal shrinkage, causing the positive and negative electrodes insides the batteries to directly contact each other, resulting in internal short circuit and thus increasing the safety risks of the secondary batteries.

To address this issue, current measures involve applying a heat-resistant inorganic ceramic layer to the polyolefin porous membrane. However, the improvement in heat resistance of the separator due to the inorganic ceramic layer is limited; furthermore, the inorganic ceramic layer has poor cohesion, leading to problems such as powder loss, and its adhesion to the positive and negative electrode plates is also poor. Applying a polymer-containing layer to the polyolefin porous membrane may enhance the adhesion of the coating layer; however, the polymer coating layer still has issues with high-temperature shrinkage and poor ionic conductivity.

As may be seen, the separators of existing technologies have difficulty in achieving high adhesion, high heat resistance, and high ionic conductivity.

During their research, the inventors of the present application surprisingly discovered that by disposing a coating layer comprising a three-dimensional skeleton structure and organic silicon particles on the surface of a porous substrate of a separator, and filling at least a portion of the organic silicon particles into the three-dimensional skeleton structure, it is possible to achieve a separator with high heat resistance, high adhesion, and high ionic conductivity, which in turn enables secondary batteries to achieve a high energy density, high thermal stability, long cycle life, and good dynamic performance.

Embodiments of the present application in a first aspect provides a separator, comprising a porous substrate and a coating layer disposed on at least one surface of the porous substrate, wherein the coating layer comprises a three-dimensional skeleton structure and organic silicon particles, and at least a portion of the organic silicon particles are filled into the three-dimensional skeleton structure.

The term "three-dimensional skeleton structure" refers to a structure with a three-dimensional spatial shape and a certain porosity, which may be formed by cooperating materials that constitute the three-dimensional skeleton structure with each other.

The term "organic silicon particles" typically refers to particulate substances formed by siloxane compounds containing a -Si-O- structural unit.

The three-dimensional skeleton structure has the advantages of a large specific surface area and good affinity with organic silicon particles, which may improve the adhesion effect with a reduced amount of binder, thereby reducing the self-discharge of secondary batteries, improving the cycle performance and dynamic performance of secondary batteries.

Filling at least a portion of the organic silicon particles into the three-dimensional skeleton structure helps

increase the heat resistance of the separator, reduce the shrinkage of the separator when heated, and lower the risk of short-circuiting between the positive and negative electrodes, thereby enabling secondary batteries to have high thermal stability. It may further maintain high adhesion strength between the coating layer and the porous substrate, as well as between the coating layer and the electrode plates (e.g., positive electrode plate, and negative electrode plate), thereby reducing the probability of organic silicon particles falling off during a long-term charging and discharging process of secondary batteries, and improving the interface between the separator and the electrode plates. Additionally, filling at least a portion of the organic silicon particles into the three-dimensional skeleton structure further allows the separator to have a high porosity and high ionic conductivity.

Furthermore, compared to traditional inorganic ceramic particles, organic silicon particles have a lower density, which may reduce weight of secondary batteries and enhance a weight energy density of secondary batteries.

Therefore, the separator provided by the embodiments of the present application may achieve a high heat resistance, high adhesion, and high ionic conductivity, and the secondary battery adopting it may achieve a high energy density, high thermal stability, long cycle life, and good dynamic performance.

In some embodiments, at least a portion of the organic silicon particles are filled into the three-dimensional skeleton structure, and the other portion of the organic silicon particles may be located on the surface of the three-dimensional skeleton structure and/or at the interface between the three-dimensional skeleton structure and the porous substrate. Moreover, at the interface between the three-dimensional skeleton structure and the porous substrate, a small amount of organic silicon particles may be embedded into the porous substrate. For example, during a winding process of an electrode assembly, due to external pressure, a small amount of organic silicon particles at the interface position may be embedded in the matrix and/or pores of the porous substrate.

In some embodiments, the separator satisfies $0 < D_1/(d_1/\sqrt{6}) \le 1$ and $0 < d_1/(L_1/\sqrt{2}) \le 1$ in which a volume distribution particle size Dv50 of the organic silicon particles is denoted as d1, in nm, an average diameter of materials that constitute the three-dimensional skeleton structure is denoted as D1, in nm, and an average length of materials that constitute the three-dimensional skeleton structure is denoted as L1, in nm.

By adjusting $D_1/(d_1/\sqrt{6})$ and $d_1/(L_1/\sqrt{2})$ within the above range, it is beneficial for the organic silicon particles and the three-dimensional skeleton structure to cooperate with each other and produce an integration effect, enabling the coating layer to have a more stable spatial network structure, thereby further enhancing the heat resistance, adhesion, and ionic conductivity of the separator, as well as the thermal stability, cycle performance, and dynamic performance of the secondary batteries.

Optionally, $0.04 \le D_1/(d_1/\sqrt{6}) \le 0.85$, $0.045 \le D_1/(d_1/\sqrt{6}) \le 0.7$, $0.05 \le D_1/(d_1/\sqrt{6}) \le 0.65$, $0.055 \le D_1/(d_1/\sqrt{6}) \le 0.5$, $0.055 \le D_1/(d_1/\sqrt{6}) \le 0.5$, $0.058 \le D_1/(d_1/\sqrt{6}) \le 0.4$. As a result, it is possible to further enhance the heat resistance, adhesion, and ionic conductivity of the separator, as well as the thermal stability, cycle performance, and dynamic performance of the secondary batteries.

Optionally, $0.04 \le d_1/(L_1/\sqrt{2}) \le 0.9$, $0.08 \le d_1/(L_1/\sqrt{2}) \le 0.8$, $0.10 \le d_1/(L_1/\sqrt{2}) \le 0.8$, $0.12 \le d_1/(L_1/\sqrt{2}) \le 0.79$, $0.14 \le d_1/(L_1/\sqrt{2}) \le 0.78$, $0.16 \le d_1/(L_1/\sqrt{2}) \le 0.78$. As a result, it is possible to further enhance the heat resistance, adhesion, and ionic conductivity of the separator, as well as the thermal stability, cycle performance, and dynamic performance of the secondary batteries.

In some embodiments, $0.04 \le D_1/(d_1/\sqrt{6}) \le 0.85$ and $0.04 \le d_1/(L_1/\sqrt{2}) \le 0.9$, optionally, $0.05 \le D_1/(d_1/\sqrt{6}) \le 0.65$ and $0.08 \le d_1/(L_1/\sqrt{2}) \le 0.8$, more optionally, $0.058 \le D_1/(d_1/\sqrt{6}) \le 0.4$ and $0.16 \le d_1/(L_1/\sqrt{2}) \le 0.78$ As a result, it is possible to further enhance the heat resistance, adhesion, and ionic conductivity of the separator, as well as the thermal stability, cycle perfo rmance, and dynamic performance of the secondary batteries.

In some embodiments, the volume distribution particle size Dv50 of the organic silicon particles, denoted as d1, may be less than or equal to 2000nm, optionally from 275nm to 1500nm, from 350nm to 1500mn, or from 400nm to 1200nm. The organic silicon particles having a smaller volume distribution particle size Dv50 is beneficial for being filled into the three-dimensional skeleton structure, forming an embedding effect, and increasing the heat resistance, adhesion, and ionic conductivity of the separator.

In some embodiments, the volume distribution particle size Dv90 of the organic silicon particles may be less than or equal to 3500nm, optionally from 800 nm to 2500nm. The organic silicon particles having a smaller volume distribution particle size Dv90 is beneficial for forming a uniform coating layer.

The volume distribution particle sizes Dv50 and Dv90 of a material have a meaning as common general knowledge in the art, representing the particle size at which the cumulative volume distribution percentage of the material

reaches 50% and 90%, respectively. These particle sizes may be determined using instruments and methods known in the art. For example, laser particle size analyzers (such as Master Size 3000) may be used for testing in accordance with GB/T 19077-2016.

In some embodiments, the morphology of the organic silicon particles may comprise spherical and/or spheroidal shape. Spherical and/or spheroidal particles facilitate good cooperation between particles and allow for the presence of voids between particles, which is conducive to the construction of a stable spatial network structure, thereby enhancing the ionic transport properties and the resistance to external force compression of the separator. Moreover, the larger voids between spherical and/or spheroidal particles reduce the impact of the coating layer on the air permeability of the porous substrate, further improve the overall permeability and ionic conductivity of the separator, and enhance the dynamic performance of the secondary battery. Furthermore, the larger porosity between spherical and/or spheroidal particles is beneficial for improving the infiltration of the separator to an electrolytic solution and the electrolytic solution-holding and electrolytic solution-retaining rates of the separator, thereby further enhancing the dynamic performance of the secondary batteries. Additionally, the larger porosity may play a weight reduction effect, which is conducive to improving the energy density per unit weight of the secondary batteries; and it is po ssible to reduce the amount of the organic silicon particles in the coating layer, which is conducive to reducing the cost of the secondary batteries.

The morphology of the organic silicon particles may be observed using a scanning electron microscope (SEM), such as the JSM-5610LV model from FEI Company in the United States, after the sample is vacuum-coated with gold.

In some embodiments, the organic silicon particles have a specific surface area, denoted as S, in $m^2/g$, ranging from 5.0 m2/g to 12.0 $m^2/g$, optionally from 6.0 $m^2/g$ to 10.0 $m^2/g$. When the specific surface area of the organic silicon particles is within the aforementioned range, it is beneficial for good cooperation between particles, making it easier for the organic silicon particles to form porous structures among the particles, and it is conducive to the migration of active ions.

The specific surface area of the organic silicon particles has a meaning as common general knowledge in this field and may be determined using instruments and methods known in the art. For example, nitrogen gas adsorption specific surface area analysis may be performed in accordance with GB/T 19587-2017, and the BET (Brunauer Emmett Teller) method may be used to calculate the results. Optionally, nitrogen gas adsorption specific surface area analysis may be conducted using a Tri-Star 3020 specific surface area pore size analyzer from Micromeritics Company in the United States.

In some embodiments, the organic silicon particles may have a true density of 1.0-2.0 $g/cm^3$, optionally from 1.2 $g/cm^3$ to 1.7 $g/cm^3$.

When the true density of the organic silicon particles is within the aforementioned range, the compaction density and packing density of the material increase, which helps to enhance the heat resistance of the separator and also helps to reduce coating leakage.

The true density of the organic silicon particles has a meaning as common general knowledge in the art and may be determined using instruments and methods known in the art. For example, according to GB/T 24586-2009, inert gases such as helium or nitrogen may be used as a medium, and a gas displacement method may be employed using a true density tester to measure the true volume Vt of the test sample. The true density of the organic silicon particles = the mass of the test sample / the true volume $V_t$ of the test sample.

In some embodiments, the organic silicon particles may have a powder compaction density under 30000N of 0.3-1.5 $g/cm^3$, optionally from 0.5 $g/cm^3$ to 1.0 $g/cm^3$.

When the powder compaction density of the organic silicon particles is within the aforementioned range, the compaction density and packing density of the material increase, which helps to enhance the heat resistance of the separator and also helps to reduce coating leakage.

The powder compaction density of the organic silicon particles has a meaning as common general knowledge in the art and may be determined using instruments and methods known in the art. For example, according to GB/T 24533-2009, the powder compaction density may be determined using an electronic pressure testing machine (e.g., UTM7305 model). An exemplary test method is as follows: weigh 1g of material, add it to a mold with a base area of 1.327 $cm^2$, pressurize it to 30000N, maintain the pressure for 30s, then release the pressure, hold for 10s, and then record and calculate the powder compaction density of the material under 30000N.

In some embodiments, the organic silicon particles may have a number-average molecular weight of 20000 to 80000, optionally from 25000 to 70000, or from 30000 to 50000. For example, the number-average molecular weight of the organic silicon particles may be 20000, 25000, 30000, 35000, 40000, 45000, 50000, 55000, 60000, 65000, 70000, 75000, 80000, or within a range consisting of any two of these values. When the number-average molecular weight of the organic silicon particles is within the aforementioned range, it is beneficial for forming organic silicon particles having a smaller particle size, which may achieve a light and thin coating application, reduce the overall thickness of the separator, and thus facilitate the improvement of the energy density of the secondary batteries. Moreover, the particle size of the organic silicon particles formed therefrom shall not too small, which reduces the risk of organic silicon particles blocking the porous substrate, thus facilitating the improvement of the overall permeability and ionic conductivity of the separator.

The number-average molecular weight of the organic silicon particles may be tested using gel permeation

chromatography (GPC). Specifically, GPC1515 instrument from Waters Company in the United States may be used for testing by dissolving the sample in tetrahydrofuran, with a dissolution time of 12 hours or more, and a concentration of the sample of 4mg/ml, filtrating the sample and testing it at a test temperature of 25°C, and a test flow rate of 1ml/min.

In some embodiments, the organic silicon particles may comprise a first structural unit; the first structural unit may have a structure as shown in Formula (I):

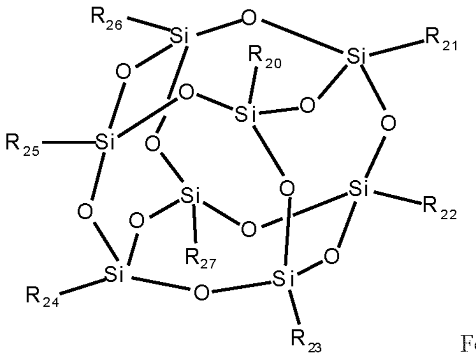

Formula (I);

in which Formula (I), $R_{20}$ to $R_{27}$ each independently comprise one or more of a substituted or unsubstituted C1 to C10 alkyl group, and a structural unit as shown in Formula (I-1), with the proviso that at least one of $R_{20}$ to $R_{27}$ comprises the structural unit shown in Formula (I-1),

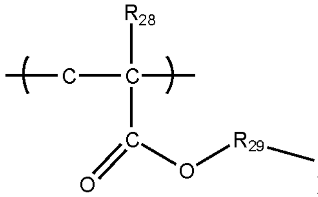

Formula (I-1);

in which Formula (I-1), $R_{28}$ comprises one or more of a hydrogen atom, and a substituted or unsubstituted C1 to C5 alkyl group; optionally, $R_{28}$ comprises a hydrogen atom, or a substituted or unsubstituted C1 to C3 alkyl group; $R_{29}$ comprises a substituted or unsubstituted C1 to C10 alkyl group; optionally, $R_{29}$ comprises a substituted or unsubstituted C3 to C10 alkyl group.

The first structural unit is formed by the opening of a carbon-carbon double bond of a substituted or unsubstituted acryloyloxy during the polymerization process of a substituted or unsubstituted acryloyloxy alkyl polysesquioxanes. The polysesquioxanes may be considered a material with a core-shell structure that is organo-inorganic hybridized, with an inorganic framework as an inner core, i.e., a skeleton structure consisting of Si-O-Si or Si-O bonds; and a shell composed of organic substituents (e.g., C1-C10 alkyl), which organic substituents are wrapped around the framework structure, and are bonded to the Si element of the framework structure. The core structure of the polysesquioxanes may impart advantages in terms of heat resistance and mechanical properties to the organic silicon particles. It has poor shrinkage and may maintain the stability of the organic silicon particles during the long-term cyclic charging and discharging process of secondary batteries, effectively isolating the positive and negative electrode plates, thereby enhancing the reliability of the secondary batteries. Furthermore, the polysesquioxanes has a smaller particle size and larger specific surface area and thus on the physical scale, it is similar to the most of polymer chain segments, which makes atoms on the surface of polysesquioxanes have high reactivity, and thus the organic silicon particles have good heat resistance, flame retardancy, and antioxidant properties and the like.

In some embodiments, in addition to the first structural unit, the organic silicon particles may further comprise a second structural unit and/or a third structural unit. In these structural units, the hydrogen atoms bonded to carbon atoms are sometimes omitted and not shown with chemical bonds.

The second structural unit may have a structure as shown in Formula (II):

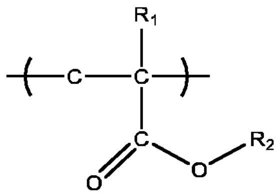

Formula (II);

in which Formula (II), $R_1$ comprises one or more of a hydrogen atom, and a substituted or unsubstituted C1-C5 alkyl group; optionally, $R_1$ comprises one or more of a hydrogen atom, and a substituted or unsubstituted C1-C3 alkyl group. $R_2$ comprises one or more of a substituted or unsubstituted C1-C20 alkyl group, a substituted or unsubstituted C3-C20 cycloalkyl group, and a substituted or unsubstituted C1-C20 hydroxyalkyl group; optionally, $R_2$ comprises one or more of a C1-C12 alkyl group, a C3-C12 cycloalkyl group, and a C1-C12 hydroxyalkyl group.

The third structural unit may have a structure as shown in Formula (III):

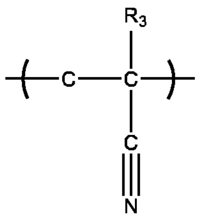

Formula (III);

in which Formula (III), $R_3$ comprises one or more of a hydrogen atom, and a substituted or unsubstituted C1-C5 alkyl group; optionally, R3 comprises one or more of a hydrogen atom, and a substituted or unsubstituted C1-C3 alkyl group.

The second structural unit may be formed by the opening of carbon-carbon double bond of acrylates monomers during the polymerization. The flexible monomeric chain segments in the molecular chain may adjust the glass transition temperature of the organic silicon particles, improve the toughness and peel strength of the organic silicon particles, and contribute to good bonding performance.

The third structural unit may be formed by the opening of carbon-carbon double bond acrylonitrile monomers during the polymerization. The third structural unit may produce excellent swelling resistance and high adhesion, and help to improve the ionic conductivity of the secondary batteries. When the organic silicon particles come into contact with an electrolytic solution, the organic silicon particles are less likely to swell, exhibiting good swelling resistance.

Although the above analysis is based on each structural unit, the synergistic effects among the structural units should not be neglected. Specifically, the first structural unit and the second structural unit may work together to enhance the adhesion performance and heat resistance of the organic silicon particles; the second structural unit and the third structural unit may work together to improve the stability and swelling resistance of the organic silicon particles.

In some embodiments, the organic silicon particles comprises the first structural unit, the second structural unit, and the third structural unit.

In some embodiments, based on a total molar amount of the first structural unit, the second structural unit, and the third structural unit, the first structural unit is present in a molar percentage, denoted as A%, of $0 < A \leq 20$. When the molar percentage of the first structural unit is within the aforementioned range, it is possible to enhance the heat resistance of the organic silicon particles, and it is beneficial for increasing the proportion of the second and third structural units due to its relatively low proportion, thereby improving the overall adhesion, stability, and swelling resistance and the like of the organic silicon particles. Optionally, $5 \leq A \leq 20$. For example, the molar percentage of the first structural unit may be 5%, 8%, 10%, 12%, 15%, 18%, 20%, or within a range consisting of any two of these values.

In some embodiments of the present application, based on a total molar amount of the first structural unit, the second structural unit, and the third structural unit, the second structural unit is present in a molar percentage, denoted as B%, of $60 \leq B < 100$. When the molar percentage of the second structural unit is within the aforementioned range, it is possible to improve flexibility of the organic silicon particles due to its relatively high proportion in the organic silicon particles, thereby significantly enhancing adhesion of the organic silicon particles; when the organic silicon particles are applied to separators, it is possible to improve the binding force between the organic silicon particles and the substrate of the separator. Optionally, of $60 \leq B \leq 80$. For example, the molar percentage of the second structural unit may be 60%, 65%, 70%, 75%, 80%, or within a range consisting of any two of these values.

In some embodiments of the present application, based on a total molar amount of the first structural unit, the second structural unit, and the third structural unit, the third structural unit is present in a molar percentage, denoted as C%, of $0 < C \leq 20$. When the molar percentage of the third structural unit is within the aforementioned range, it is possible to significantly improve the stability of the organic silicon particles. Optionally, $5 \leq C \leq 20$. For example, the molar percentage

of the third structural unit may be 5%, 8%, 10%, 12%, 15%, 18%, 20%, or within a range consisting of any two of these values.

The organic silicon particles comprise a second structural unit, which endows the organic silicon particles with good adhesion and flexibility. However, due to the inevitable contact of the organic silicon particles with an electrolytic solution when applied to the separator, the swelling effect of the electrolytic solution will to some extent reduce the adhesion of the organic silicon particles. In view of the above, the organic silicon particles further comprise a third structural unit, and the cyano group in the third structural unit may cooperate with the second structural unit to jointly improve the swelling resistance and adhesion properties of the organic silicon particles. Especially, when the present application further satisfies $3 \le B/C \le 16$, the second structural unit may better cooperate with the third structural unit to improve the adhesion, stability, and anti-swelling properties of the organic silicon particles. For example, B/C may be 3, 4, 5, 8, 10, 12, 15, 16, 18, or within a range consisting of any two of these values.

The organic silicon particles comprise a second structural unit, which endows the organic silicon particles with good adhesion. However, the heat resistance of the second structural unit itself is worse. When the organic silicon particles are applied to the separator, the second structural unit may be destroyed as the secondary battery charging and discharging time increases, and the temperature inside the battery rises. The polysesquioxanes inorganic structure in the first structural unit may cooperate with the second structural unit to improve the overall heat resistance and adhesion properties of the organic silicon particles. Especially, when the present application further satisfies $3 \le B/A \le 16$, the first structural unit may better cooperate with the second structural unit to improve the adhesion, and heat resistance of the organic silicon particles. For example, B/A may be 3, 4, 5, 8, 10, 12, 15, 16, 18, or within a range consisting of any two of these values.

In some embodiments, B: C: A may be (12 to 16): (1 to 4): (1 to 4). When the molar percentages of the first structural unit, the second structural unit, and the third structural unit satisfy the above ratio, the three structural units in the organic silicon particles interact synergistically to jointly improve the adhesion, stability, anti-swelling, and thermal stability of the organic silicon particles.

The first structural unit may comprise various chemical structures, and the specific chemical structure of the first structural unit will be described next.

In some embodiments, $R_{20}$ to $R_{27}$ may each independently comprise a structural unit as shown in Formula (I-1); optionally, $R_{28}$ may comprise a hydrogen atom, methyl, ethyl, n-propyl, isopropyl, n-butyl, sec-butyl, tert-butyl, or n-pentyl; and/or $R_{29}$ may comprise n-propyl, isopropyl, n-butyl, sec-butyl, tert-butyl, n-pentyl, n-octyl, iso-octyl, or 2-ethylhexyl.

In some embodiments, one of $R_{20}$ to $R_{27}$ may comprise a structural unit as shown in Formula (I-1); optionally, $R_{28}$ may comprise a hydrogen atom, methyl, ethyl, n-propyl, isopropyl, n-butyl, sec-butyl, tert-butyl, or n-pentyl; and/or $R_{29}$ may comprise n-propyl, isopropyl, n-butyl, sec-butyl, tert-butyl, n-pentyl, n-octyl, iso-octyl, or 2-ethylhexyl.

The second structural unit may comprise various chemical structures, and the specific chemical structure of the second structural unit will be described next.

In some embodiments, $R_1$ may comprise a hydrogen atom or methyl.

In some embodiments, $R_2$ may comprise methyl, ethyl, n-propyl, isopropyl, n-butyl, sec-butyl, tert-butyl, n-pentyl, n-octyl, iso-octyl, 2-ethylhexyl, dodecyl, or isobornyl.

Exemplarily, the second structural unit may comprise one or more of the structural units shown in Formulas (II-1) to (II-8):

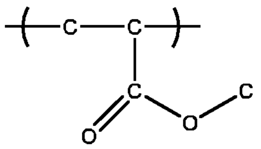 Formula (II-1), 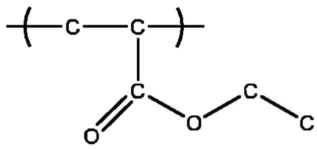 Formula (II-2),

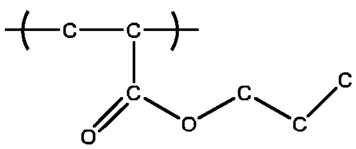 Formula (II-3), 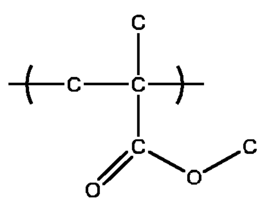 Formula (II-4),

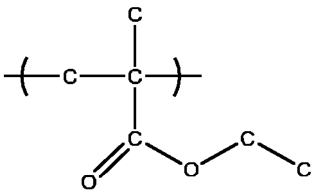 Formula (II-5), 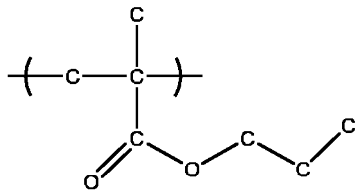 Formula (II-6),

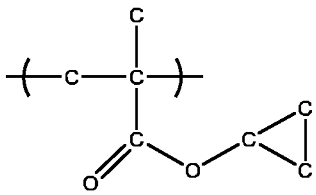 Formula (II-7), and 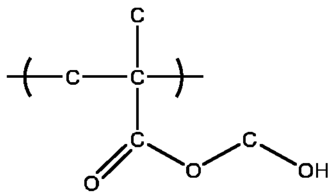 Formula (II-8).

The third structural unit may comprise various chemical structures, and the specific chemical structure of the third structural unit will be described next.

In some embodiments, R3 may comprise a hydrogen atom or methyl.

Exemplarily, the third structural unit may comprise one or more of the structures shown in Formulas (III-1) to (III-4):

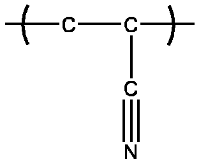 Formula (III-1), 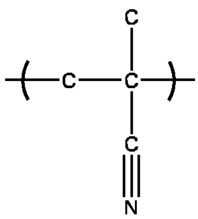 Formula (III-2),

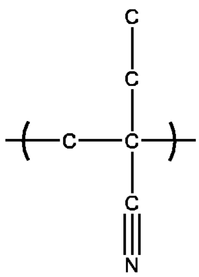 Formula (III-3), 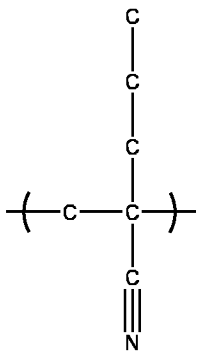 Formula (III-4).

The types of groups in the organic silicon particles may be determined using infrared spectroscopy. For example, the infrared spectrum of the material may be tested to determine its characteristic peaks, thereby identifying the types of modifying groups. Specifically, infrared spectroscopy analysis may be performed using instruments and methods known in the art, such as an infrared spectrometer (e.g., the IS10 Fourier transform infrared spectrometer from Nicolet, a company in the United States), according to the general rules of infrared spectrum analysis method of GB/T 6040-2019.

In some embodiments, the organic silicon particles exhibits a characteristic peak in the range of 1100 $cm^{-1}$ to 1120 $cm^{-1}$ in its infrared spectrum, which indicates the presence of a Si-O-Si framework of silsesquioxane.

In some embodiments, the organic silicon particles exhibits a characteristic peak in the range of 1750 $cm^{-1}$ to 1735 $cm^{-1}$ in its infrared spectrum, which indicates the presence of an ester group.

In some embodiments, the organic silicon particles exhibits a characteristic peak in the range of 2260 $cm^{-1}$ to 2220 $cm^{-1}$ in its infrared spectrum, which indicates the presence of a cyano group.

In some embodiments, the organic silicon particles may comprise a structural unit as shown in Formula (a):

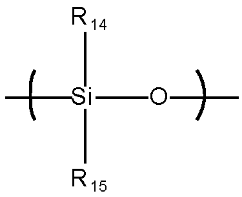

Formula (a);

in which Formula (a), $R_{14}$ and $R_{15}$ each independently is at least one selected from a hydrogen atom, a substituted or unsubstituted C1-C10 alkyl group, a hydroxyl group, and an amino group; optionally, $R_{14}$ and $R_{15}$ each independently is at least one selected from a hydrogen atom, a substituted or unsubstituted C1-C6 alkyl group, a hydroxyl group, and an amino group.

Optionally, the organic silicon particles may comprise one or more of polymethylsiloxane, polydimethylsiloxane, polydiethylsiloxane, polymethylhydroxysiloxane, polymethylaminosiloxane, and their respective derivatives. Derivatives typically refer to products derived by replacing hydrogen atoms or groups in the polymer with other atoms or groups.

In some embodiments, the organic silicon particles may be present in an amount of greater than or equal to 50 wt%, optionally from 50 to 90 wt%, from 50 to 88 wt%, based on a total weight of the coating layer. When the amount of the organic silicon particles is within the aforementioned range, it is possible to further improve the overall adhesion, stability, anti-swelling, and heat resistance of the separator.

In some embodiments, the three-dimensional skeleton structure may be present in an amount of less than 50 wt%, optionally from 8 to 48 wt%, from 10 to 48 wt%, based on a total weight of the coating layer.

In some embodiments, the material that constitutes the three-dimensional skeleton structure comprise at least one of filaments, rods, tubes, or bars. Suitable shaped materials facilitate the formation of a more stable spatial network structure between the three-dimensional skeleton structure and the organic silicon particles, thereby further enhancing the heat resistance, ionic conductivity, and infiltration and retention properties of the separator to an electrolytic solution.

In some embodiments, the material that constitutes the three-dimensional skeleton structure may have an average diameter, denoted as $D_1$, of less than or equal to 50 nm, optionally from 4 to 45 nm, from 4 to 42 nm, from 10 to 42 nm, from 16 to 40 nm. When the average diameter of the material that constitutes the three-dimensional skeleton structure is within the aforementioned range, it is possible to further enhance the ionic conductivity and voltage breakdown resistance of the separator, while also facilitating the formation of an integration effect with the organic silicon particles, thereby further enhancing the heat resistance of the separator.

In some embodiments, the material that constitutes the three-dimensional skeleton structure may have an average length, denoted as $L_1$, of 100 to 3500 nm, optionally from 400 to 3000 nm, from 500 to 3000 nm, from 600 to 3000 nm, from 700 to 3000 nm. When the average length of the material that constitutes the three-dimensional skeleton structure is within the aforementioned range, it may further enhance the heat resistance and ionic conductivity of the separator.

In some embodiments, the material that constitutes the three-dimensional skeleton structure may have an aspect ratio of 5 to 150, optionally from 12 to 120, from 20 to 100, from 30 to 95, from 40 to 90. When the aspect ratio of the material that constitutes the three-dimensional skeleton structure is within the aforementioned range, it is possible to further enhance the ionic conductivity and t infiltration and retention properties of the separator to an electrolytic solution.

The average length and average diameter of the material that constitutes the three-dimensional skeleton structure may be determined using the method comprising the steps of cutting out a sample of 3.6 mm×3.6 mm from any area of the separator, and mapping a microscopic morphology of the coating layer of the sample with a scanning electron microscope (e.g., ZEISS Sigma 300) at a high vacuum mode, with a working voltage of 3kV, a magnification of 30,000, to obtain a SEM image; according to the obtained SEM image, selecting a plurality of (e.g., more than 5) test areas for length statistics, with each test area being 0.5 μm×0.5μm in size; and then taking the average value of the lengths obtained from each test area as the average length of the material that constitutes the three-dimensional skeleton structure; according to the obtained SEM image, using Nano Measurer particle size distribution statistics software, selecting a plurality of (e.g., more than 5) test areas for diameter statistics, with each test area being 0.5 μm×0.5μm in size; and then taking the average value of the diameters obtained from each test area as the average diameter of the materials that constitute the three-dimensional skeleton structure.

When the material that constitutes the three-dimensional skeleton structure comprise nanocellulose, the diameters at the ends of the nanocellulose in its lengthwise direction are usually smaller, while the diameter at its middle position are usually larger. In this case, the maximum value of diameters of the nanocellulose in its lengthwise direction may be taken as a diameter of the nanocellulose. The diameter of other nanocelluloses may be taken in a similar manner, and then the average diameter of the nanocellulose may be obtained using the aforementioned method and Nano Measurer particle size distribution statistics software.

In some embodiments, the material that constitutes the three-dimensional skeleton structure may comprise at

least one of organic materials or inorganic materials.

Optionally, the organic materials may comprise at least one of nanocellulose, polytetrafluoroethylene (PTFE) nanofibers, or polyamide nanofibers.

Optionally, the inorganic materials may comprise at least one of halloysite nanotubes, nanorod-shaped alumina, nanorod-shaped boehmite, nanorod-shaped silica, or glass fibers.

The material that constitutes the three-dimensional skeleton structure is rich in hydroxyl groups, which can be easily bonded with the organo silicon particles and porous substrate, and can improve the adhesion effect, reduce the self-discharge of secondary batteries, and improve the cycle and dynamic performances of secondary batteries at a less binder dosage; it is also possible to form a stable coating structure, and to improve the heat resistance and ionic conductivity of the secondary batteries.

In some embodiments, the material that constitutes the three-dimensional skeleton structure may comprise nanocellulose. Optionally, the nanocellulose may comprise cellulose nanofibrils (CNF, also known as nanofibrillated cellulose or microfibrillated cellulose), cellulose nanocrystals (CNC, also known as cellulose nanocrystals or nanocrystalline cellulose), and bacterial nanocellulose (BNC, also known as bacterial cellulose or microbial cellulose).

Nanocellulose refers to cellulose with any one dimension at the nanometer level (e.g., less than 100 nm), which combines the properties of cellulose and nanoparticles. Nanocellulose may be a macromolecular nanomaterial extracted from natural materials such as wood and cotton through one or more chemical, physical, or biological means, which has the advantages of being widely available, low cost, biodegradable, high modulus, and high specific surface area. Therefore, it is an excellent substitute for traditional petrochemical resources, effectively alleviating environmental pollution and the scarcity of petrochemical resources. Nanocellulose also has a good high temperature resistance and a small volume change when being heated, thereby enhancing the heat resistance of the separator. Additionally, compared to traditional inorganic ceramic particles, nanocellulose has a lower density, which may further reduce the weight of the secondary batteries and improve the weight energy density of the secondary batteries. In addition, the three-dimensional skeleton structure formed from the nanocellulose may have tiny nanopores to prevent current leakage, thereby enabling the separator to have good electrolytic solution infiltration and retention characteristics as well as good voltage breakdown resistance characteristics.

In some embodiments, the nanocellulose may comprise at least one of unmodified nanocellulose (also known as hydroxyl nanocellulose) or modified nanocellulose, optionally modified nanocellulose.

Modified nanocellulose refers to nanocellulose that includes both hydroxyl and modifying groups. In some embodiments, the modified nanocellulose comprises a modifying group and the modifying group may comprise at least one of amino, carboxyl, aldehyde, sulfonic acid, boric acid, or phosphoric acid group, optionally at least one of sulfonic acid, boric acid, or phosphoric acid group.

When the nanocellulose has the above specific modifying group, on the one hand, it can effectively improve the heat resistance of the separator and improve the thermal stability of the secondary batteries; on the other hand, it can also improve the bonding strength between the coating layer and the porous substrate. When the nanocellulose has the above specific modifying group, it is beneficial for the nanocellulose and organic silicon particles to cooperate with each other to form an integration effect, thereby enabling the coating layer to have a more stable spatial network structure, and thus helping to enhance the infiltration and retention characteristics of the separator to the electrolytic solution and to enhance the ionic conductivity and the voltage breakdown resistance characteristics of the separator. In addition, the presence of the modifying group reduces the proportion of hydroxyl groups, thereby enabling the coating slurry to have a suitable viscosity, which is more favorable for application, and thus improving the production efficiency of the separator and the uniformity of the coating layer.

In some embodiments, a molar ratio of the modifying group to the hydroxyl group may be from 1:4 to 4:1, optionally from 2:3 to 7:3. When the molar ratio of the modifying group to the hydroxyl group is within the above range, it is possible to further enhance the heat resistance, the ionic conductivity, and the infiltration and retention properties of the separator to an electrolytic solution. And the following can be effectively avoided: when the molar ratio of the modifying group to the hydroxyl group is too small, the further improvement of the modifying group on the heat resistance and ionic conductivity of the separator may not be obvious; when the molar ratio of the modifying group to the hydroxyl group is too large, the infiltration and retention characteristics of the separator to the electrolytic solution may deteriorate, which may affect the cycle performance and reliability of the secondary batteries. At the same time, it may also lead to a decrease in the heat resistance of the separator, which may also affect the improvement of the thermal stability of the secondary batteries.

The type of modifying groups in the nanocellulose can be determined using infrared spectroscopy. For example, the infrared spectrum of the material may be tested to determine its characteristic peaks, thereby identifying the types of modifying groups. Specifically, infrared spectroscopy analysis may be performed using instruments and methods known in the art, such as an infrared spectrometer (e.g., the IS10 Fourier transform infrared spectrometer from Nicolet, a company in the United States), according to the general rules of infrared spectrum analysis method of GB/T 6040-2019.

In some embodiments, the material that constitutes the three-dimensional skeleton structure comprises a

sulfonic acid group, and the content of elemental sulfur in the material that constitutes the three-dimensional skeleton structure may be ≥0.1 wt%, optionally from 0.2 to 0.5 wt%, based on the total weight of the material that constitutes the three-dimensional skeleton structure. Optionally, the material that constitutes the three-dimensional skeletal structure may comprise nanocellulose.

The content of elemental sulphur in the material that constitutes the three-dimensional skeleton structure may be measured according to the following method: the material that constitutes the three-dimensional skeleton structure are dried and then ground in a mortar (e.g., an agate mortar) for 30 min, after which it is tested using an X-ray diffractometer (e.g., a Miniflex 600-C) to obtain the content of elemental sulphur. The test can be performed using a Cu target and a Ni filter, with a tube voltage of 40 KV, a tube current of 15 mA, and a continuous scanning range of 5°-80°.

In some embodiments, the coating layer may further comprise a non-granular binder. There is no specific limitation on the type of non-granular binder in the present application, and any well-known material with good adhesion may be used. Optionally, the non-granular binder may comprise at least one of polyacrylonitrile, acrylics resins, acrylates resins, polyvinyl alcohol, isobutylene-maleic anhydride copolymer, polyacrylamide, sodium carboxymethyl cellulose, carboxymethyl chitosan, sodium alginate, or their respective derivatives. Derivatives typically refer to products derived from the substitution of hydrogen atoms or atomic groups in a polymer by other atoms or atomic groups.

In some embodiments, the non-granular binder is present in the coating layer in an amount of ≤ 5 wt%, based on the total weight of the coating layer.

In some embodiments, the coating layer may have a thickness of ≤4 μm, optionally from 0.4μm to 3 μm. The present application may achieve a light and thin coating application, reduce the overall thickness of the separator, and contributes to the energy density of the secondary batteries.

In some embodiments, the porous substrate may have a thickness of ≤6 μm, optionally from 3μm to 5 μm. The coating layer of the present application enables the separator to have significantly improved heat resistance, whereby a thinner porous substrate can be selected, thereby contributing to enhancing the energy density of the secondary batteries.

There is no particular limitation on the material of the porous substrate in the present application, and any well-known substrate with good chemical stability and mechanical stability can be selected. For example, the porous substrate may comprise at least one of a porous polyolefin-based resin film (e.g., at least one of polyethylene, polypropylene, or polyvinylidene fluoride), a porous glass fibre, or a porous non-woven fabric. The porous substrate may be a monolayer film or a multilayer composite film. Where the porous substrate is a multilayer composite film, materials for each layers may be the same or different.

In some embodiments, the separator may have a longitudinal thermal shrinkage of ≤4.5%, optionally from 0.8% to 3%, at 150°C for 1h.

In some embodiments, the separator may have a transverse thermal shrinkage of ≤4.5%, optionally from 1% to 3% at 150°C for 1h.

The separator has a low thermal shrinkage in both the transverse and longitudinal directions at a high temperature of 150° C., thereby enhancing the reliability of the secondary batteries.

In some embodiments, the separator may have a longitudinal tensile strength of ≥1600 kg/cm$^2$, optionally from 1800 kg/cm$^2$ to 4500 kg/cm$^2$.

In some embodiments, the separator may have a transverse tensile strength of ≥1600kg/cm$^2$, optionally from 1800 kg/cm$^2$ to 4500 kg/cm$^2$.

The separator has a high tensile strength in both the transverse and longitudinal directions, which reduces the probability of the separator breaking during battery expansion, thereby enhancing the reliability of the secondary batteries.

In some embodiments, the separator may have an infiltration length of ≥20 mm, optionally from 30 mm to 80 mm.

In some embodiments, the separator may have an infiltration speed of ≥2 mm/s, optionally from 3 mm/s to 10 mm/s.

The separator has good infiltration and retention characteristics to an electrolytic solution, whereby the ionic conductivity of the separator and the capacity exertion characteristics of the secondary batteries can be improved.

In some embodiments, the separator may have an air permeability of ≤350 s/100 mL, optionally from 100 to 270 s/100 mL. The separator has good air permeability, thereby improving the ionic conductivity and capacity exertion characteristics of the secondary batteries

In some embodiments, the separator may have an ionic conductivity of ≥0.5 mS/cm, optionally from 0.55 to 0.98 mS/cm.

The thermal shrinkage, tensile strength, and air permeability of the separator all have the meaning well known in the art and may be measured using methods known in the art. For example, all may be tested with reference to GB/T 36363-2018.

The infiltration length and infiltration speed of the separator both have the meaning well known in the art, and may be measured using methods known in the art. The exemplary test method is as follows: cutting the separator into a sample with a width of 5 mm and a length of 100 mm, placing the sample horizontally after fixing its both ends; taking a drop of 0.5 mg of an electrolytic solution and placing it on the center of the sample, and after a specified time (1 min for the present

application), taking a picture and measure the length of electrolytic diffusion, thereby obtaining the infiltration length and infiltration speed of the separator. For accuracy, a plurality of samples (for example, 5 to 10) can be tested to obtain the test result by taking an average value. The electrolytic solution can be prepared as follows: Mixing ethylene carbonate (EC), methyl ethyl carbonate (EMC), and diethyl carbonate (DEC) at a mass ratio of 30:50:20 to obtain an organic solvent, then dissolving sufficient anhydrous $LiPF_6$ into the above organic solvent to prepare an electrolytic solution with a concentration of 1 mol/L.

The ionic conductivity of the separator can be obtained through an electrochemical impedance spectroscopy experiment. Specifically, the separator is cut into circular pieces of a certain area. After drying, it is sandwiched between two stainless steel electrodes. After absorbing an enough amount of electrolytic solution, it is sealed to form a button cell and is subjected to an AC impedance spectroscopy experiment.

It should be noted that the coating parameters (such as thickness, etc.) of the above separator are all coating parameters on a single side of the porous substrate. When the coating layer is applied to both sides of the porous substrate, if the coating parameters of either side meet the requirements of the present application, it is considered to fall within the scope of protection of this application.

## Preparation Method

Embodiments of the present application in a second aspect provide a method for preparing the separator according to the first aspect of the present application, including the steps of: providing a porous substrate; formulating a coating slurry by blending organic silicon particles with a binder to obtain a mixture and then adding to the mixture materials that constitute the three-dimensional skeleton structure and a solvent with mixing homogenously; and applying the coating slurry to at least one surface of the porous substrate followed by drying to obtain the separator, wherein the separator comprises a porous substrate and a coating layer disposed on at least one surface of the porous substrate, and the coating layer comprises a three-dimensional skeleton structure and organic silicon particles, and at least a portion of the organic silicon particles are filled into the three-dimensional skeleton structure.

In the preparation method provided by the embodiments of the present application, firstly, the organic silicon particles are blended with the binder, and then the material that constitutes the three-dimensional skeleton structure (e.g., at least one of filaments, rods, tubes, or bars) is added, thereby forming a three-dimensional skeleton structure and allowing at least a portion of the organic silicon particles to be filled into the three-dimensional skeleton structure.

The organic silicon particles comprising the structural unit shown in Formula (a) may be available commercially.

The organic silicon particles comprising the first structural unit, the second structural unit, and/or the third structural unit may be obtained according to the preparation method provided by the examples of the present application.

In some embodiments, the preparation method of the organic silicon particles may comprise the steps of providing a first monomer, a second monomer, and/or a third monomer; mixing the first monomer, the second monomer, and/or the third monomer, and polymerizing the resulting mixture under the action of an initiator to generate the organic silicon particles.

The first monomer, the second monomer, and the third monomer are respectively used to form the first structural unit, the second structural unit, and the third structural unit as mentioned above in the present application.

Exemplarily, the first monomer may comprise one or more of methylacryloyloxypropyl cage-type polysilsesquioxane, methylacryloyloxypropyl hepta-isobutyl polysilsesquioxane, methylacryloyloxypropyl hepta-octyl polysilsesquioxane, acryloyloxypropyl cage-type polysilsesquioxane, acryloyloxypropyl hepta-isobutyl polysilsesquioxane, and methylacryloyloxypropyl hepta-octyl polysilsesquioxane.

Exemplarily, the second monomer may comprise one or more of methylacrylate, ethyl acrylate, n-propyl acrylate, isopropyl acrylate, n-butyl acrylate, isobutyl acrylate, sec-butyl acrylate, tert-butyl acrylate, n-pentyl acrylate, n-octyl acrylate, iso-octyl acrylate, 2-ethylhexyl acrylate, cyclohexyl acrylate, lauryl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate.

Exemplarily, the third monomer may comprise acrylonitrile and/or methyl acrylonitrile.

In some embodiments, the step of mixing the first monomer, the second monomer, and/or the third monomer and polymerizing the resulting mixture under the action of an initiator to generate the organic silicon particles may specifically comprise the steps of adding the first monomer, the second monomer, and/or the third monomer to a solvent and an emulsifier to form a mixed system; adding an initiator to the mixed system, and polymerizing the resulting mixture under the action of the initiator to generate the organic silicon particles.

The present application may carry out the copolymerization of various monomers through an emulsion polymerization, which is more convenient. Of course, other polymerization methods may also be used, such as solution polymerization, suspension polymerization, and the like, and the process parameters used in the polymerization process may be the commonly used parameters in the art, which will not be repeated here.

In some embodiments, the emulsifier may comprise one or more of sodium dodecyl sulfate, sodium dodecylbenzenesulfonate, alkyl diphenyl oxide disulfonate, and ethoxylated alkyl phenol sulfate ammonium.

In some embodiments, based on a total mass of the first monomer, the second monomer, and the third monomer, the emulsifier may be present in a mass percentage of 0.1% to 5%. When the mass percentage of the emulsifier is within the aforementioned range, the first monomer, the second monomer, and the third monomer may be emulsified and dispersed in a solvent to form a relatively uniform system.

In some embodiments, the initiator may comprise potassium persulfate and/or ammonium persulfate.

In some embodiments, based on a total mass of the first monomer, the second monomer, and the third monomer, the initiator may be present in a mass percentage of 0.15% to 1%. When the mass percentage of the initiator is within the aforementioned range, it is beneficial for a complete polymerization.

In some embodiments, the solvent may comprise water, for example, deionized water.

As a specific embodiment, the preparation method of the organic silicon particles may comprise the steps of: mixing deionized water, an emulsifier, the first monomer, the second monomer, and/or the third monomer with stirring to obtain a prepolymer solution; adding the emulsifier and deionized water to a container and emulsifying the mixture with stirring for 30min to 60min to obtain a uniform and stable emulsion; then slowly dripping the emulsion into the prepolymer solution and an initiator solution wherein the initiator solution may be for example formed by dissolving potassium persulfate and/or ammonium persulfate in deionized water; after the addition is completed, heating the resulting mixture to 90°C to 110°C and maintaining it at this temperature for 0.5h, cooling it to 40°C, adjusting the pH to 7 to 8 with aqueous ammonia, followed by filtering, discharging, and then drying to obtain the organic silicon particles.

In some embodiments, the solvent used to prepare the coating slurry may be water, for example, deionized water.

In some embodiments, the coating slurry may further comprise other components, such as dispersants, wetting agents, binders, and the like.

In some embodiments, the material that constitutes the three-dimensional skeleton structure may comprise at least one of organic materials or inorganic materials. Optionally, the organic materials may comprise at least one of nanocellulose, polytetrafluoroethylene (PTFE) nanofibers, or polyamide nanofibers. Optionally, the inorganic material may comprise at least one of halloysite nanotubes, nanorod-shaped alumina, nanorod-shaped boehmite, nanorod-shaped silica, or glass fibers.

In some embodiments, the material that constitutes the three-dimensional skeleton structure may comprise nanocellulose.

In some embodiments, the nanocellulose may be obtained by the steps of: providing cellulose powder with a whiteness of ≥80%; mixing the obtained cellulose powder with a modifying solution for reaction; after washing and removing impurities, adjusting the pH to neutral, and then grinding and cutting it to obtain nanocellulose.

Optionally, the cellulose powder with a whiteness of ≥80% may be available commercially, or by chemical methods (e.g., acid hydrolysis, alkali treatment, Tempo-catalyzed oxidation), biological methods (e.g., enzymatic treatment), and mechanical methods (e.g., ultra-fine grinding, ultrasonic disruption, high-pressure homogenization). The fiber raw material used to prepare the cellulose powder with a whiteness of ≥80% may comprise at least one of plant fibers, such as cotton fibers (e.g., Gossypium fibers, kapok fibers), bast fibers (e.g., sisal fibers, ramie fibers, jute fibers, flax fibers, hemp fibers, abaca fibers), brown fibers, wood fibers, bamboo fibers, and grass fibers.

In some embodiments, the cellulose powder with a whiteness of ≥80% may also be prepared by the following process. After the fiber raw material is loosened to remove impurities, it is cooked with an alkaline solution (e.g., an aqueous NaOH solution with a concentration of 4 wt% to 20 wt%, optionally 5 wt% to 15 wt%), and then sequentially subjected to water washing to remove impurities (e.g., 3 to 6 times), bleaching (e.g., using sodium hypochlorite and/or hydrogen peroxide), acid washing to remove impurities, water washing to remove impurities, dewatering, and airflow drying to obtain cellulose powder.

In some embodiments, the modifying solution may be an acid solution (e.g., aqueous sulfuric acid solution, aqueous boric acid solution, aqueous phosphoric acid solution, aqueous acetic acid solution) or an alkali solution (e.g., urea solution in an organic solvent). Optionally, the modifying solution is an acid solution.

Optionally, the concentration of the acid solution may be 5 wt% to 80 wt%. When the modifying solution is an aqueous sulfuric acid solution, the concentration of the acid solution may be 40 wt% to 80 wt%, thereby obtaining cellulose powder with sulfonic acid groups. When the modifying solution is an aqueous boric acid solution, the concentration of the acid solution may be 5 wt% to 10 wt%, thereby obtaining cellulose powder with boric acid groups. When the modifying solution is an aqueous phosphoric acid solution, the concentration of the acid solution may be 45 wt% to 75 wt%, thereby obtaining cellulose powder with phosphoric acid groups. When the modifying solution is an aqueous acetic acid solution, the concentration of the acid solution may be 40 wt% to 80 wt%, thereby obtaining cellulose powder with carboxylic acid groups.

Optionally, the urea solution in an organic solvent may be urea solution in dimethylbenzene, thereby obtaining cellulose powder with amino groups.

In some embodiments, a mass ratio of cellulose powder to a modifying solution may be 1:2.5 to 1:50, optionally 1:5 to 1:30.

When the modifying solution is an aqueous sulfuric acid solution, the mass ratio of cellulose powder to acid solution may be 1:5 to 1:30. When the modifying solution is an aqueous boric acid solution, the mass ratio of cellulose powder to acid solution may be 1:20 to 1:50. When the modifying solution is an aqueous phosphoric acid solution, the mass ratio of cellulose powder to acid solution may be 1:5 to 1:30. When the modifying solution is an aqueous acetic acid solution, the mass ratio of cellulose powder to acid solution may be 1:5 to 1:30. When the modifying solution is a urea solution in organic solvent, the mass ratio of cellulose powder to urea solution in organic solvent may be 1:4 to 1:40.

In some embodiments, when the modifying solution is an acid solution, the reaction may be carried out at a temperature not exceeding 80°C, optionally at a temperature of 30°C to 60°C, and the reaction of cellulose powder with the modifying solution may be carried out for 0.25 h to 3 h, optionally 0.5 h to 1.8 h.

In some embodiments, when the modifying solution is an alkaline solution, the reaction can be carried out at a temperature of 100°C to 145°C, and the reaction of the cellulose powder with the modification solution can be carried out for 0.5 h to 3.5 h.

In some embodiments, grinding can be performed using a grinder, and cutting can be performed using a high-pressure homogenizer. By adjusting the grinding parameters (such as the number of grinding cycles, grinding time, etc.) of the grinder and the cutting parameters of the high-pressure homogenizer, nanocellulose with different average diameters and/or different average lengths can be obtained.

In some embodiments, a coating machine can be used for coating the coating slurry. The present application does not have specific restrictions on the model of the coating machine, for example, a commercially available coating machine can be used. The coating machine comprises an intaglio roller; the intaglio roller is used for transferring the slurry onto the porous substrate.

In some embodiments, the coating method of the coating slurry can be transfer coating, rotary spraying, dip coating, and the like.

Some raw materials and parameters such as their amounts used in the method for preparing the separator of the present application can be determined with respect to the separator of the first aspect of the embodiments of the present application, and will not be repeatedly described herein.

Unless otherwise specified, all raw materials used in the method for preparing the separator of the present application may be commercially available.

## Secondary Battery

Embodiments of the present application in a third aspect provides a secondary battery.

Secondary batteries, also known as rechargeable batteries or storage batteries, refer to batteries that can be used continuously by activating active materials through charging after the battery is discharged. Normally, a secondary battery comprises an electrode assembly and an electrolytic solution, and the electrode assembly comprises a positive electrode plate, a negative electrode plate and a separator, the separator is disposed between the positive electrode plate and the negative electrode plate and is mainly used to prevent short circuit between positive electrode and negative electrode and meanwhile allows active ions to pass through.

The present application has no particular limitation on the type of the secondary battery. For example, the secondary battery may be a lithium ion battery, a sodium ion battery, a lithium metal battery, a sodium metal battery and the like. In particular, the secondary battery may be a lithium ion secondary battery.

The secondary battery of the third aspect of embodiments of the present application comprises the separator of the first aspect of embodiments of the present application or the separator prepared by the method of the second aspect of embodiments of the present application, wherein the separator is spaced between the positive electrode plate and the negative electrode plate. Optionally, the coating layer of the present application is present on at least the side of the separator close to the negative electrode plate. As a result, the secondary battery of the present application can have the combined characteristics of high energy density, high thermal stability, long service life and good dynamic performance.

[Positive electrode plate]

In some embodiments, the positive electrode plate comprises a positive electrode current collector and a positive electrode film layer which is disposed on one or more surface of the positive electrode current collector and comprises a positive electrode active material. For example, the positive current collector has two opposite surfaces along the thickness direction of the positive current collector, and the positive electrode film layer is disposed on any one or both of the two opposite surfaces of the positive current collector.

When the secondary battery of the present application is a lithium ion battery, the positive electrode active material may comprise, but is not limited to, one or more of lithium transition metal oxides, lithium-containing phosphates, and their respective modified compounds thereof. Examples of lithium transition metal oxides may include, but are not limited to, one or more of lithium cobalt oxide, lithium nickel oxide, lithium manganese oxide, lithium nickel cobalt oxide,

lithium manganese cobalt oxide, lithium nickel manganese oxide, lithium nickel cobalt manganese oxide, lithium nickel cobalt aluminum oxide, and respective modified compounds thereof. Examples of lithium-containing phosphates may include, but are not limited to, one or more of lithium iron phosphate, composite of lithium iron phosphate with carbon, lithium manganese phosphate, composite of lithium manganese phosphate with carbon, lithium manganese iron phosphate, composite of lithium manganese iron phosphate with carbon, and respective modified compounds thereof.

In some embodiments, in order to further increase the energy density of the secondary battery, the positive electrode active material for the lithium-ion battery may comprise one or more of lithium transition metal oxides having general formula $Li_aNi_bCo_cM_yO_eA_f$ and modified compounds thereof. $0.8 \le a \le 1.2$, $0.5 \le b < 1$, $0 < c < 1$, $0 < d < 1$, $1 \le e \le 2$, $0 \le f \le 1$, M is one or more selected from Mn, Al, Zr, Zn, Cu, Cr, Mg, Fe, V, Ti and B, and A is one or more selected from N, F, S and Cl.

As an example, positive electrode active materials for lithium-ion batteries may include one or more of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM81 1), $LiNi_{0.85}Co_{0.15}Al_{0.05}O_2$, $LiFePO_4$ and $LiMnPO_4$.

When the secondary battery of the present application is a sodium ion battery, the positive electrode active material may include but not limited to one or more of sodium-containing transition metal oxides, polyanion materials (such as phosphate, fluorophosphate, pyrophosphate, sulfate, and the like), and Prussian blue materials.

As an example, positive electrode active materials for sodium-ion batteries may include one or more of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, Prussian blue materials and the materials having the general formula $X_pM'_q(PO_4)_rO_xY_{3-x}$. In general formula $X_pM'_q(PO_4)_rO_xY_{3-x}$, $0<p \le 4$, $0<q \le 2$, $1 \le r \le 3$, $0 \le x \le 2$, X is one or more selected from $H^+$, $Li^+$, $Na^+$, $K^+$and $NH_4^+$, M' is a transition metal cation and optionally is one or more of V, Ti, Mn, Fe, Co, Ni, Cu and Zn, and Y is a halogen anion and optionally is one or more of F, Cl and Br.

In the present application, the modified compounds of the above positive electrode active materials may be doping-modified and/or surface coating layer-modified compounds of the positive electrode active materials.

In some embodiments, the positive electrode film layer may further optionally comprise a conductive agent for positive electrode. The present application does not particularly limit the type of conductive agent for positive electrode, and as an example, the conductive agent for positive electrode includes one or more of superconducting carbon, conductive graphite, acetylene black, carbon black, Ketjen black, carbon dots, carbon nanotubes, graphene, and carbon nanofibers.

In some embodiments, the positive electrode film layer may further optionally comprise a binder for positive electrode. The present application does not particularly limit the type of the binder for positive electrode, and as an example, the binder for positive electrode may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resins.

In some embodiments, the positive electrode current collector may be a metal foil or a composite current collector. As an example of the metal foil, aluminum foil may be used. The composite current collector may include a base layer of polymeric material and a layer of metallic material formed on one or more surfaces of the base layer of polymeric material. As an example, the metal material may comprise one or more of aluminum, aluminum alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The positive electrode film layer is usually formed by applying a positive electrode slurry to a positive electrode current collector followed by drying and cold-pressing. The positive electrode slurry is usually formed by dispersing a positive electrode active material, an optional conductive agent, an optional binder and any other components in a solvent and stirring them uniformly. The solvent may be N-methylpyrrolidone (NMP), but is not limited thereto.

[Negative electrode plate]

In some embodiments, the negative electrode plate comprises a negative electrode current collector and a negative electrode film layer which is disposed on one or more surfaces of the negative electrode current collector and comprises a negative electrode active material. For example, the negative current collector has two opposite surfaces along the thickness direction of the negative current collector, and the negative electrode film layer is disposed on any one or both of the two opposite surfaces of the negative current collector.

The negative electrode active material can be a negative electrode active material well known in the art for secondary batteries. As an example, the negative electrode active material may include but not limited to one or more of natural graphite, artificial graphite, soft carbon, hard carbon, silicon-based material, tin-based material, and lithium titanate. The silicon-based material may include one or more of elemental silicon, silicon oxide, silicon-carbon composite, silicon-nitrogen composite, and silicon alloy. The tin-based material may include one or more of elemental tin, tin oxide, and tin alloy materials.

In some embodiments, the negative electrode film layer may further optionally comprise a conductive agent for negative electrode. The present application does not particularly limit the type of conductive agent for negative electrode, and as an example, the conductive agent for negative electrode may include one or more of superconducting carbon, conductive graphite, acetylene black, carbon black, Ketjen black, carbon dots, carbon nanotubes, graphene, and carbon nanofibers.

In some embodiments, the negative electrode film layer may further optionally comprises a binder for negative electrode. The present application does not particularly limit the type of the binder for negative electrode, and as an example, the binder for negative electrode may include one or more of styrene-butadiene rubber (SBR), water-soluble unsaturated resin SR-1B, aqueous acrylics resin (e.g., polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS).

In some embodiments, the negative electrode film layer may further optionally comprise other auxiliary agents. As examples, other auxiliary agents may include thickeners, e.g., sodium carboxymethylcellulose (CMC), PTC thermistor material, etc.

In some embodiments, the negative electrode collector may be a metal foil or a composite collector. As an example of a metal foil, a copper foil may be used. The composite current collector may include a base layer of polymeric material and a layer of metallic material formed on one or more surfaces of the base layer of polymeric material. As an example, the metal material may comprise one or more of copper, copper alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The negative electrode film layer is usually formed by applying a negative electrode slurry to a negative electrode collector, followed by drying and cold-pressing. The negative electrode slurry is typically formed by dispersing the negative active material, optional conductive agent, optional binder, other optional auxiliary agents in a solvent and stirring them uniformly. The solvent may be N-methylpyrrolidone (NMP) or deionized water, but is not limited thereto.

The negative electrode plate does not exclude additional functional layers other than the negative electrode film layer. For example, in some embodiments, the negative electrode plate described in the present application further comprises a conductive primer layer (such as composed of a conductive agent and a binder) sandwiched between the negative electrode current collector and the negative electrode film layer, and disposed on the surface of the negative electrode current collector. In some embodiments, the negative electrode plate described in this application further comprises a protective layer covering the surface of the negative electrode film layer.

[Electrolytic solution]

During the charging and discharging process of the battery, active ions are intercalated and deintercalated back and forth between the positive electrode plate and the negative electrode plate, and the electrolytic solution functions as conducting active ions between the positive electrode plate and the negative electrode plate. There is no specific limitation on the type of electrolytic solution in the present application, and it can be selected according to actual needs.

The electrolytic solution includes an electrolyte salt and a solvent. There is no specific limitation on the type of solvent and the electrolyte salt, and they can be selected according to actual needs.

When the secondary battery of the present application is a lithium ion battery, as an example, the electrolyte salt may comprise one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium difluorosulfimide (LiFSI), lithium bistrifluoromethanesulfonimide (LiTFSI), lithium trifluoromethanesulfonate (LiTFS), lithium difluoro(oxalate)borate (LiDFOB), bis(oxalate)borate (Li-BOB), lithium difluorophosphate ($LiPO_2F_2$), lithium difluorobisoxalate phosphate (LiDFOP), and lithium tetrafluorooxalate phosphate (LiTFOP).

When the secondary battery of the present application is a sodium ion battery, as an example, the electrolyte salt may comprise, but is not limited to, one or more of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bisfluorosulfonimide (NaFSI), sodium bistrifluoromethanesulfonimide (NaTFSI), sodium trifluoromethanesulfonate (NaTFS), sodium difluoro(oxalate) borate (NaDFOB), sodium bis(oxalate)borate (NaBOB), sodium difluorophosphate ($NaPO_2F_2$), sodium difluorobisoxalate phosphate (NaDFOP) and sodium tetrafluorooxalate phosphate (NaTFOP).

As an example, the solvent may comprise, but is not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethylsulfone (MSM), methylethylsulfone (EMS), and diethylsulfone (ESE).

In some embodiments, the electrolytic solution may optionally further comprise an additive. For example, the additives may comprise negative electrode film-forming additives, positive electrode film-forming additives, and additives that can improve certain performance of the battery, such as additives that improve overcharging performance of the battery, additives that improve high-temperature performance of the battery, and additives that improve low-temperature power/rating performance of the battery.

In some embodiments, the positive electrode plate, the separator, and the negative electrode plate may be fabricated into an electrode assembly by a winding process and/or a lamination process.

In some embodiments, the secondary battery may comprise an outer packaging. The outer packaging may be used to encapsulate the electrode assembly and the electrolytic solution.

In some embodiments, the outer packaging of the secondary battery may be a hard housing, such as a hard plastic housing, aluminum housing, steel housing, or the like. The outer packaging of the secondary battery may also be a soft pack, such as a pouch type soft pack. The material of the soft pack may be plastic, such as one or more of polypropylene (PP), polybutylene terephthalate (PBT), and polybutylene succinate (PBS).

The present application does not have particular limitation on the shape of the secondary battery, which may be cylindrical, square, or other arbitrary shapes. Fig. 1 shows a battery 5 of a square structure as an example.

In some embodiments, referring to Fig. 2, the outer packaging may include a housing 51 and a cover plate 53. The housing 51 may include a bottom plate and side plates connected to the bottom plate, and the bottom plate and the side plates are combined to form an accommodating cavity. The housing 51 has an opening communicating with the accommodating cavity, and the cover plate 53 is used for covering the opening to close the accommodating cavity. The positive electrode plate, the negative electrode plate, and the separator may be formed into an electrode assembly 52 by a winding process and/or a lamination process. The battery assembly 52 is encapsulated in the accommodating cavity. The electrolytic solution infiltrates into the electrode assembly 52. The number of electrode assemblies 52 included in the secondary battery 5 may be one or multiple, and may be adjusted according to requirements.

The preparation method of the secondary battery of the present application is well known. In some embodiments, a positive electrode plate, a separator, a negative electrode plate, and electrolytic solution can be assembled to form a secondary battery. As an example, the positive electrode plate, the separator, and the negative electrode plate can be formed into an electrode assembly by a winding process and/or a laminating process, the electrode assembly is placed in an outer packaging and dried, followed by injection with the electrolytic solution; after the processes including vacuum encapsulation, steady standing, chemical formation, and shaping, a secondary battery is obtained.

In some embodiments, the secondary battery of the present application can be assembled into a battery module, and the number of secondary batteries contained in the battery module can be multiple, and the specific number can be adjusted according to the application and capacity of the battery module.

Fig. 3 is a schematic diagram of a battery module 4 as an example Referring to Fig. 3, in the battery module 4, a plurality of secondary batteries 5 may be disposed sequentially in the length direction of the battery module 4. Apparently, they may also be disposed in any other manner. Furthermore, the plurality of secondary batteries 5 may be fixed by fasteners.

Optionally, the battery module 4 may further include a housing having an accommodating space in which a plurality of secondary batteries 5 are accommodated.

In some embodiments, the above-mentioned battery module may also be assembled into a battery pack, and the number of battery modules contained in the battery pack can be adjusted according to the application and capacity of the battery pack.

Figs. 4 and 5 are schematic diagrams of battery pack 1 as an example. As shown in Figs. 4 and 5, the battery pack 1 may comprise a battery case and a plurality of the battery modules 4 disposed in the battery case. The battery case comprises an upper case body 2 and a lower case body 3. The upper case body 2 is used for covering the lower case body 3 to form a closed space for receiving the battery modules 4. A plurality of battery modules 4 can be disposed in the battery case in any manner.

## Electrical device

Embodiments of the present application in a fourth aspect provides an electrical device comprising one or more of the secondary battery, battery module, and battery pack of the present application. The secondary battery, battery module or battery pack can be used as a power source of the electrical device, and can also be used as an energy storage unit of the electrical device. The electrical device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, etc.

The electrical device may comprise the secondary battery, the battery module or the battery pack selected according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, etc. The electric device is generally required to be light and thin, and a secondary battery can be used as a power source.

## Examples

The following examples are intended to describe the present application more specifically, merely for the purpose of illustration. Various modifications and variations within the scope of the present application are apparent to those skilled in the related art. Unless otherwise stated, all parts, percentages, and ratios reported in the following examples are based on mass, and all reagents used in the examples are commercially available or synthesized by conventional methods, and can be directly obtained without further treatment, and the instruments used in the examples are commercially available.

### Preparation of nanocellulose

After loosening the Gossypium linter and slag removal by a cotton opener, the obtained mixture was cooked at 150 °C with 5 wt.% NaOH aqueous solution for 2 hours, and then washed with water to remove impurities (3 times of water washing), bleached with sodium hypochlorite, washed with diluted hydrochloric acid to remove impurities, washed with water to remove impurities (1 time of water washing), water discharged and dried with air flow to obtain Gossypium cellulose powder with whiteness of ≥ 85%.

1 kg of the obtained Gossypium cellulose powder was mixed with 30 kg of 60 wt.% sulfuric acid aqueous solution, and the reaction was carried out at 60°C for 1.5 h. After the reaction was completed, the reaction mixture was subjected to washing with water (3 times of water washing) to remove impurities, filtering, and removing acid and impurities. The pH of the mixture was adjusted to neutral with 10 wt.% aqueous NaOH solution, and then subjected to grinding with a grinder and nanoscale cutting with a high pressure homogenizer, to obtain nanocellulose with sulfonic acid modifying group having a molar ratio of sulfonic acid group to hydroxyl group of 2:3 to 7:3.

During the preparation process, nanocellulose with different average diameters and/or lengths can be obtained by adjusting the reaction concentration, reaction time, processing parameters of the grinder, and the cutting parameters of the high-pressure homogenizer.

The molar ratio of the modifying groups to the surface hydroxyl groups in the nanocellulose may be determined by the following method. According to the phthalic anhydride method in GB/T 12008.3-2009, the hydroxyl values of the raw cellulose and nanocellulose (the milligrams of potassium hydroxide equivalent to the hydroxyl content in each sample) were tested respectively. The obtained values, expressed in mg KOH/g, were converted to mmol/g as a hydroxyl content. By subtracting the hydroxyl content of the nanocellulose from that of the raw cellulose, the content of the modifying groups (i.e., the content of the modified hydroxyl groups) may be obtained, thereby calculating the molar ratio of the modifying groups to the hydroxyl groups.

### Example 1

Preparation of separator

A PE porous substrate having a thickness of 4.7 μm was provided.

Preparation of organic silicon particles

Into a 5L three-neck flask, 1400g of deionized water and 7g of sodium lauryl sulfate were added, and the resulting mixture was emulsified by stirring at a speed of 1500r/min for 30 minutes, thereby obtaining a uniform and stable emulsion. Then, 645.68g of methyl acrylate, 79.59g of acrylonitrile, and 663.50g of methacryloxypropyl cage-type polysilsesquioxane at a molar ratio of methyl acrylate, acrylonitrile, and methacryloxypropyl cage-type polysilsesquioxane of 15:3:2 were sequentially add, and the resulting mixture was stirred at 1500r/min for 30 minutes, resulting in a uniform prepolymer.

In an anhydrous three-neck flask, 3g of emulsifier and 1000g of deionized water were added, and the resulting mixture was emulsified by stirring at high speed for 30 minutes to obtain a uniform and stable emulsion. Then, using a peristaltic pump, the prepolymer prepared in the previous step and an initiator solution prepared by dissolving 3g of potassium persulfate as an initiator in 30g of deionized water were slowly add. After the addition is complete, the reaction mixture was heated to 90°C and maintained at the temperature for 0.5 hours, and then cooled to 40°C, the pH of which was adjust to 7-8 with aqueous ammonia, and then the mixture was subjected to filtering, discharging, and drying to obtain the organic silicon particles.

Formulation of coating slurry: The prepared organic silicon particles was blended with an acrylate resin as a binder, and then nanocellulose and an appropriate amount of deionized water as a solvent were added. The resulting mixture was mixed well to obtain the coating slurry. The mass ratio of organic silicon particles, nanocellulose, and binder was 85:11:4.

Coating: The prepared coating slurry was applied to both surfaces of the PE porous substrate using a coating machine, followed by drying and cutting, to obtain the separator.

Preparation of positive electrode plate

The positive electrode active material $LiNi_{0.5}Co_{0.2}Mn_{0.3}O_2$ (NCM523), carbon black (Super P) as conductive agent, and polyvinylidene fluoride (PVDF) as binder were uniformly mixed at a mass ratio of 96.2:2.7:1.1 in an appropriate amount of solvent N-methylpyrrolidone (NMP) to obtain a positive electrode slurry; the positive electrode slurry was applied on an aluminum foil as positive electrode collector, and then dried and cold-pressed, slitted, and cut, to give the positive electrode plate.

Preparation of negative electrode plate

Artificial graphite as negative electrode active material, carbon black (Super P) as conductive agent, styrene butadiene rubber (SBR) as binder, and carboxymethyl cellulose sodium (CMC) were mixed at a mass ratio of 96.4:0.7:1.8:1.1 in a suitable solvent deionized water to obtain a negative electrode slurry; the negative electrode slurry was applied onto a copper foil as negative electrode current collector; and after processes including drying, cold-pressing, slitting and cutting, the negative electrode plate was obtained.

Preparation of electrolytic solution

Ethylene carbonate (EC), dimethyl carbonate (DMC) and ethyl methyl carbonate (EMC) at a mass ratio of 30: 30: 40 were mixed to obtain an organic solvent, and then a fully anhydrous $LiPF_6$ was dissolved in the above organic solvent, to prepare an electrolytic solution with a concentration of 1 mol/L.

Preparation of secondary battery

The positive electrode plate, the separator, and the negative electrode plate were stacked and wound in sequence to obtain an electrode assembly; the electrode assembly was placed in an aluminum film as an outer packaging and dried, followed by injection with the electrolytic solution; after the processes including vacuum encapsulation, standing, chemical formation, and shaping, a small soft-pack secondary battery with a capacity of 4240 mAh was obtained.

**Examples 2-13**

The secondary batteries were prepared by a method similar to that of Example 1, except that the organic silicon particles used in the preparation of the separator had different volume distribution particle sizes Dv50 and/or the nanocellulose had different average diameters and average lengths. The specific parameters were summarized in Tables 1 and 2. The volume distribution particle size Dv50 of the organic silicon particles can be adjusted by grinding, high-speed dispersion, or other physical shearing methods.

**Examples 14-20**

The secondary batteries were prepared by a method similar to that of Example 1, except that the organic silicon particles used in the preparation of the separator were different. The organic silicon particles used in Examples 13-19 were prepared by a method similar to that of Example 1, except that at least one of the raw material components and contents had been adjusted, as shown in Tables 1 and 2.

**Examples 21-25**

The secondary batteries were prepared by a method similar to that of Example 1, except that the content of the organic silicon particles and/or nanocellulose used in the preparation of the separator were different. The specific parameters were summarized in Tables 1 and 2.

**Comparative Example 1**

The secondary battery was prepared by a method similar to that of Example 1, except that in the preparation of the separator, aluminum oxide primary particles (with a volume average particle size Dv50 of approximately 500nm) were used instead of organic silicon particles. When formulating the coating slurry, the aluminum oxide, nanocellulose, and acrylic resin were added to the solvent deionized water at the above ratio of Example, and the resulting was mixed well to obtain the coating slurry.

## Test section

(1) Thermal shrinkage rate test of separator

Sample preparation: The separator prepared above was punched into samples with a width of 50 mm and a length of 100 mm using a punching machine; and five parallel samples were placed on A4 paper and fixed; and then the A4 paper loaded with the samples was placed on corrugated paper with a thickness of from 1 mm to 5 mm.

Sample test: a A4 paper placed on the corrugated paper was placed into a blast oven, and the blast oven was set to the temperature of 150 °C; After the temperature reached the set temperature and stabilized for 30 minutes, timing starts until the set time (1 h in this application) was reached; the length and width of the separator were measured, and the values were marked as a and b, respectively.

Calculation of thermal shrinkage rate: machine direction (MD) heat shrinkage rate = $[(100-a)/100] \times 100\%$, transverse direction (TD) thermal shrinkage rate = $[(50-b)/50] \times 100\%$, and the average value of five replicate samples was taken as the test result.

(2) Hot box testing of secondary battery

The secondary battery was charged with a constant current of 1 C to 4.2 V at 25 °C, and continued to charge with the constant voltage until the current was ≤ 0.05 C, and it was allowed to stand for 5 minutes, then the secondary batteries with a fixture was tested in a DHG-9070A DHG series high-temperature oven, and raised from room temperature to 100 ± 2 °C at a rate of 5 °C/min, and held for 30 minutes; then, the temperature was raised at a heating rate of 5 °C/min. Every time the temperature was raised by 5 °C, the temperature was kept for 30 minutes. During the temperature rise process, the surface temperature change of the secondary battery was monitored. When the temperature starts to rise sharply, the corresponding oven temperature was recorded as the hot box failure temperature of the secondary battery. The higher hot box failure temperature of a secondary battery means the better thermal stability of the secondary battery. For accuracy, the average value of five replicate samples was taken as the test result.

(3) Test of cycle performance of secondary battery

At 45 °C, the secondary battery was charged to 4.2 V with a constant current of 1 C, continued to charge at constant voltage until the current was ≤ 0.05 C, at which time the secondary battery was in a fully charged state and the charge capacity was recorded, i.e. the charge capacity after the first cycle; After the secondary battery was allowed to stand for 5 min, it was discharged to 2.8 V with a constant current of 1 C, which was a cyclic charge and discharge process and at which time the discharge capacity was recorded, i.e. the discharge capacity after the first cycle. The secondary battery was subjected to the above cyclic charge-discharge process, and the discharge capacity after each cycle was recorded. Capacity retention ratio (%) of secondary battery at 45 °C after 1000 cycles = discharge capacity after 1000 cycles/discharge capacity after the first cycle × 100%. For accuracy, the average value of five replicate samples was taken as the test result.

Table 1

| No. | Organic silicon particles | | | | | | | | | |
|---|---|---|---|---|---|---|---|---|---|---|
| | First monomer | First structural unit | Second monom er | Second structural unit | Third monomer | Third structural unit | Number average molecul ar weight | Volume distributio n particle size Dv50 di (nm) | Mass conten t (wt%) |
| | Kind | Molar percentag e A% | kind | Molar percentag e B% | kind | Molar percentag e C% | | | |
| Ex. 1 | Methacryloxyprop yl cage-type polysilsesquioxan e | 10 | Methyl acrylate | 75 | Acrylonitri le | 15 | 43676 | 50 | 85 |
| Ex. 2 | Methacryloxyprop yl cage-type polysilsesquioxan e | 10 | Methyl acrylate | 75 | Acrylonitri le | 15 | 43676 | 250 | 85 |
| Ex. 3 | Methacryloxyprop yl cage-type polysilsesquioxan e | 10 | Methyl acrylate | 75 | Acrylonitri le | 15 | 43676 | 500 | 85 |
| Ex. 4 | Methacryloxyprop yl cage-type polysilsesquioxan e | 10 | Methyl acrylate | 75 | Acrylonitri le | 15 | 43676 | 800 | 85 |
| Ex. 5 | Methacryloxyprop yl cage-type polysilsesquioxan e | 10 | Methyl acrylate | 75 | Acrylonitri le | 15 | 43676 | 1000 | 85 |
| Ex. 6 | Methacryloxyprop yl cage-type polysilsesquioxan e | 10 | Methyl acrylate | 75 | Acrylonitri le | 15 | 43676 | 1000 | 85 |
| Ex. 7 | Methacryloxyprop yl cage-type polysilsesquioxan e | 10 | Methyl acrylate | 75 | Acrylonitri le | 15 | 43676 | 1500 | 85 |
| Ex. 8 | Methacryloxyprop yl cage-type polysilsesquioxan e | 10 | Methyl acrylate | 75 | Acrylonitri le | 15 | 43676 | 2000 | 85 |
| Ex. 9 | Methacryloxyprop yl cage-type polysilsesquioxan e | 10 | Methyl acrylate | 75 | Acrylonitri le | 15 | 43676 | 2200 | 85 |
| Ex. 10 | Methacryloxyprop yl cage-type polysilsesquioxan e | 10 | Methyl acrylate | 75 | Acrylonitri le | 15 | 43676 | 1000 | 85 |
| Ex. 11 | Methacryloxyprop yl cage-type polysilsesquioxan e | 10 | Methyl acrylate | 75 | Acrylonitri le | 15 | 43676 | 1000 | 85 |
| Ex. 12 | Methacryloxyprop yl cage-type polysilsesquioxan e | 10 | Methyl acrylate | 75 | Acrylonitri le | 15 | 43676 | 1000 | 85 |
| Ex. 13 | Methacryloxyprop yl cage-type polysilsesquioxan e | 10 | Methyl acrylate | 75 | Acrylonitri le | 15 | 43676 | 1000 | 85 |

(continued)

| No. | Organic silicon particles | | | | | | | | | |
|---|---|---|---|---|---|---|---|---|---|---|
| | First monomer | First structural unit | Second monom er | Second structural unit | Third monomer | Third structural unit | Number average molecul ar weight | Volume distributio n particle size Dv50 di (nm) | Mass conten t (wt%) |
| | Kind | Molar percentag e A% | kind | Molar percentag e B% | kind | Molar percentag e C% | | | |
| Ex. 14 | Acryloxypropyl cage-type poly-silsesquioxan e | 10 | Methyl ac-rylate | 75 | Acrylonitri le | 15 | 39529 | 1000 | 85 |
| Ex. 15 | Methacryloxyprop yl hepta-octyl polysilsesquioxan e | 10 | Methyl acrylate | 75 | Acrylonitri le | 15 | 32652 | 1000 | 85 |
| Ex. 16 | Methacryloxyprop yl cage-type polysilsesquioxan e | 5 | Methyl acrylate | 80 | Acrylonitri le | 15 | 25473 | 1000 | 85 |
| Ex. 17 | Methacryloxyprop yl cage-type polysilsesquioxan e | 20 | Methyl acrylate | 60 | Acrylonitri le | 20 | 65327 | 1000 | 85 |
| Ex. 18 | Methacryloxyprop yl cage-type polysilsesquioxan e | 25 | Methyl acrylate | 50 | Acrylonitri le | 25 | 78562 | 1000 | 85 |
| Ex. 19 | Methacryloxyprop yl cage-type polysilsesquioxan e | 20 | Methyl acrylate | 80 | / | / | 53670 | 1000 | 85 |
| Ex. 20 | Polydimethylsiloxane | | | | | | / | 800 | 85 |
| Ex. 21 | Methacryloxyprop yl cage-type polysilsesquioxan e | 10 | Methyl acrylate | 75 | Acrylonitri le | 15 | 43676 | 800 | 45 |
| Ex. 22 | Methacryloxyprop yl cage-type polysilsesquioxan e | 10 | Methyl acrylate | 75 | Acrylonitri le | 15 | 43676 | 800 | 50 |
| Ex. 23 | Methacryloxyprop yl cage-type polysilsesquioxan e | 10 | Methyl acrylate | 75 | Acrylonitri le | 15 | 43676 | 800 | 65 |
| Ex. 24 | Methacryloxyprop yl cage-type polysilsesquioxan e | 10 | Methyl acrylate | 75 | Acrylonitri le | 15 | 43676 | 800 | 85 |
| Ex. 25 | Methacryloxyprop yl cage-type polysilsesquioxan e | 10 | Methyl acrylate | 75 | Acrylonitri le | 15 | 43676 | 800 | 90 |
| CEx . 1 | Alumina primary particles | | | | | | | | 85 |

Table 2

| No. | Nanocellulose | | | | Performances of separators | | | | Performances of secondary batteries | |
|---|---|---|---|---|---|---|---|---|---|---|
| | Average diameter Di (nm) | Average length Li (nm) | Li/D1 | Mass conte nt (wt%) | $D_1/(d_1/\sqrt{6})$ | $d_1/(L_1/\sqrt{2})$ | Thermal shrinkage rate at 150 °C/1h (%) | | Hot box failure temperatu re (°C) | Capacity retention ratio after 1000 cycles at 45°C (%) |
| | | | | | | | MD | TD | | |
| Ex. 1 | 25 | 1875 | 75 | 11 | 1.225 | 0.038 | 2.80% | 2.50 % | 178 | 85% |
| Ex. 2 | 25 | 1875 | 75 | 11 | 0.245 | 0.189 | 2.50% | 2.20 % | 180 | 88% |
| Ex. 3 | 25 | 1875 | 75 | 11 | 0.122 | 0.377 | 1.80% | 1.50 % | 185 | 89% |
| Ex. 4 | 25 | 1875 | 75 | 11 | 0.077 | 0.603 | 1.00% | 0.80 % | 190 | 91% |
| Ex. 5 | 25 | 1875 | 75 | 11 | 0.061 | 0.754 | 1.10% | 1.00 % | 189 | 92% |
| Ex. 6 | 40 | 3000 | 75 | 11 | 0.098 | 0.471 | 1.80% | 1.50 % | 184 | 91% |
| Ex. 7 | 40 | 3000 | 75 | 11 | 0.065 | 0.707 | 2.50% | 2.20 % | 181 | 88% |
| Ex. 8 | 40 | 3000 | 75 | 11 | 0.049 | 0.943 | 2.70% | 2.40 % | 179 | 86% |
| Ex. 9 | 40 | 3000 | 75 | 11 | 0.045 | 1.037 | 3.50% | 3.10 % | 173 | 83% |
| Ex. 10 | 50 | 3750 | 75 | 11 | 0.122 | 0.377 | 4.00% | 3.50 % | 171 | 82% |
| Ex. 11 | 45 | 3375 | 75 | 11 | 0.110 | 0.419 | 3.00% | 2.70 % | 175 | 88% |
| Ex. 12 | 30 | 2250 | 75 | 11 | 0.073 | 0.629 | 1.50% | 1.20 % | 186 | 90% |
| Ex. 13 | 15 | 1125 | 75 | 11 | 0.037 | 1.257 | 2.90% | 2.50 % | 180 | 87% |
| Ex. 14 | 30 | 2250 | 75 | 11 | 0.073 | 0.629 | 1.50% | 1.20 % | 187 | 88% |
| Ex. 15 | 30 | 2250 | 75 | 11 | 0.073 | 0.629 | 2.20% | 2.00 % | 183 | 89% |
| Ex. 16 | 30 | 2250 | 75 | 11 | 0.073 | 0.629 | 2.20% | 2.00 % | 182 | 87% |
| Ex. 17 | 30 | 2250 | 75 | 11 | 0.073 | 0.629 | 2.00% | 1.80 % | 184 | 86% |
| Ex. 18 | 30 | 2250 | 75 | 11 | 0.073 | 0.629 | 2.80% | 2.40 % | 178 | 84% |
| Ex. 19 | 30 | 2250 | 75 | 11 | 0.073 | 0.629 | 3.00% | 2.50 % | 175 | 85% |
| Ex. 20 | 30 | 2250 | 75 | 11 | 0.073 | 0.629 | 1.50% | 1.20 % | 185 | 83% |
| Ex. 21 | 30 | 2250 | 75 | 51 | 0.092 | 0.503 | 3.30% | 3.00 % | 174 | 88% |
| Ex. 22 | 30 | 2250 | 75 | 46 | 0.092 | 0.503 | 2.20% | 2.00 % | 182 | 89% |
| Ex. 23 | 30 | 2250 | 75 | 31 | 0.092 | 0.503 | 1.60% | 1.40 % | 186 | 90% |

(continued)

| No. | Nanocellulose | | | | Performances of separators | | | | Performances of secondary batteries | |
|---|---|---|---|---|---|---|---|---|---|---|
| | Average diameter Di (nm) | Average length Li (nm) | Li/D1 | Mass conte nt (wt%) | $D_1/(d_1/\sqrt{6})$ | $d_1/(L_1/\sqrt{2})$ | Thermal shrinkage rate at 150 °C/1h (%) | | Hot box failure temperatu re (°C) | Capacity retention ratio after 1000 cycles at 45°C (%) |
| | | | | | | | MD | TD | | |
| Ex. 24 | 30 | 2250 | 75 | 11 | 0.092 | 0.503 | 1.80% | 1.50 % | 184 | 90% |
| Ex. 25 | 30 | 2250 | 75 | 6 | 0.092 | 0.503 | 3.00% | 2.50 % | 175 | 89% |
| CEx. 1 | 25 | 1875 | 75 | 11 | 0.122 | 0.377 | 5.50% | 5.20 % | 165 | 82% |

As shown by Tables 1 and 2, by setting a coating layer including a three-dimensional skeleton structure and organic silicon particles on the surface of porous substrate of the separator, and filling at least a portion of the organic silicon particles into the three-dimensional skeleton structure, enables the separator to exhibit high heat resistance, allowing the secondary battery to have combined characteristics of high energy density, high thermal stability, and long cycle life.

Furthermore, as shown by Tables 1 and 2, by additionally adjusting the parameters of the nanocellulose and organic silicon particles, and satisfying $0 < D_1/(d_1/\sqrt{6}) \leq 1$ and $0 < d_1/(L_1/\sqrt{2})$, the performances of the separator and the secondary battery can be further enhanced. On this basis, by further adjusting one or more of $D_1/(d_1/\sqrt{6})$, $d_1/(L_1/\sqrt{2})$ D1, d1, and L1, the comprehensive performance of the separator and the secondary battery can be further improved.

Additionally, as shown in Tables 1 and 2, by further adjusting the mass content of the nanocellulose and organic silicon particles, the overall performance of the separator membrane and the secondary battery can be further enhanced.

It should be noted that the present application is not limited to the above-mentioned embodiments. The above-mentioned embodiments are merely examples, and within the scope of the technical solutions of the present application, embodiments that have substantially the same configuration as the technical idea and exert the same effects are included in the technical scope of the present application. In addition, without departing from the scope of the present application, various modifications conceivable by those skilled in the art can be introduced to the embodiments, and other forms constructed by combining some components in the embodiments are also included in the scope of the present application.

## Claims

1. A separator comprising a porous substrate and a coating layer disposed on at least one surface of the porous substrate, wherein the coating layer comprises a three-dimensional skeleton structure and organic silicon particles, and at least a portion of the organic silicon particles are filled into the three-dimensional skeleton structure.

2. The separator as claimed in claim 1, wherein the separator satisfies $0 < D_1/(d_1/\sqrt{6}) \leq 1$ and $0 < d_1/(L_1/\sqrt{2}) \leq 1$

   in which
   a volume distribution particle size Dv50 of the organic silicon particles is denoted as $d_1$, in nm,
   an average diameter of materials that constitute the three-dimensional skeleton structure is denoted as $D_1$, in nm, and
   an average length of materials that constitute the three-dimensional skeleton structure is denoted as $L_1$, in nm.

3. The separator as claimed in claim 1 or 2, wherein

$$0.04 \leq D_1/(d_1/\sqrt{6}) \leq 0.85, \text{ optionally, } 0.05 \leq D_1/(d_1/\sqrt{6}) \leq 0.65;$$

   and/or

$$0.04 \leq d_1/(L_1/\sqrt{2}) \leq 0.9, \text{ optionally, } 0.08 \leq d_1/(L_1/\sqrt{2}) \leq 0.8.$$

4. The separator as claimed in any one of claims 1 to 3, wherein

   a volume distribution particle size Dv50 of the organic silicon particles is denoted as $d_1$, and $d_1$ is less than or equal to 2000nm, optionally from 275 to 1500nm; and/or
   an average diameter of the materials that constitute the three-dimensional skeleton structure is denoted as $D_1$, and Di is less than or equal to 50nm, optionally from 10 to 42nm; and/or
   an average length of the materials that constitute the three-dimensional skeleton structure is denoted as $L_1$, and $L_1$ is from 100 to 3500nm, optionally from 400 to 3000nm.

5. The separator as claimed in any one of claims 1 to 4, wherein the organic silicon particles satisfy at least one of the following conditions (1) to (6):

   (1) the organic silicon particles are in a morphology of sphere and/or spheroid;
   (2) the organic silicon particles have a volume distribution particle size Dv90 of less than or equal to 3500nm,

optionally from 800 to 2500nm;
(3) the organic silicon particles have a specific surface area, denoted as S, in $m^2/g$, ranging from 5.0 $m^2/g$ to 12.0 $m^2/g$, optionally ranging from 6.0 $m^2/g$ to 10.0 $m^2/g$;
(4) the organic silicon particles have a true density ranging from 1.0 $g/cm^3$ to 2.0 $g/cm^3$, optionally ranging from 1.2 $g/cm^3$ to 1.7 $g/cm^3$;
(5) the organic silicon particles have a powder compaction density under 30000N ranging from 0.3 $g/cm^3$ to 1.5 $g/cm^3$, optionally ranging from 0.5 $g/cm^3$ to 1.0 $g/cm^3$; or
(6) the organic silicon particles have a number-average molecular weight ranging from 20000 to 80000, optionally ranging from 30000 to 50000.

**6.** The separator as claimed in any one of claims 1 to 5, wherein

the organic silicon particles are present in an amount of greater than or equal to 50 wt%, optionally from 50% to 90%, based on a total weight of the coating layer; and/or
the three-dimensional skeleton structure is present in an amount of less than 50 wt%, optionally from 8% to 48%, based on a total weight of the coating layer.

**7.** The separator as claimed in any one of claims 1 to 6, wherein the organic silicon particles comprise a first structural unit as shown in Formula (I):

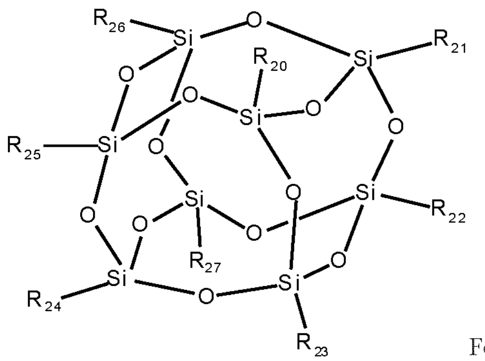
Formula (I);

in which,

$R_{20}$ to $R_{27}$ each independently comprise one or more of a substituted or unsubstituted C1 to C10 alkyl group, and a structural unit as shown in Formula (I-1), with the proviso that at least one of $R_{20}$ to $R_{27}$ comprises the structural unit shown in Formula (I-1),

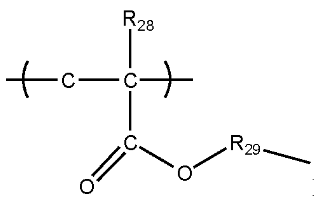
Formula (I-1);

in which,
$R_{28}$ comprises one or more of a hydrogen atom, and a substituted or unsubstituted C1 to C5 alkyl group; optionally, $R_{28}$ comprises a hydrogen atom, or a substituted or unsubstituted C1 to C3 alkyl group;
$R_{29}$ comprises a substituted or unsubstituted C1 to C10 alkyl group; optionally, $R_{29}$ comprises a substituted or unsubstituted C3 to C10 alkyl group.

**8.** The separator as claimed in claim 7, wherein the organic silicon particles further comprise a second structural unit and/or a third structural unit;

the second structural unit has a structure as shown in Formula (II):

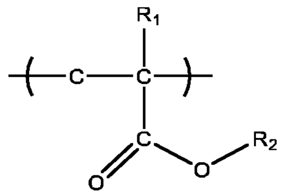

Formula (II);

in which,
$R_1$ comprises one or more of a hydrogen atom, and a substituted or unsubstituted C1 to C5 alkyl group; optionally, $R_1$ comprises one or more of a hydrogen atom, and a substituted or unsubstituted C1 to C3 alkyl group;
$R_2$ comprises one or more of a substituted or unsubstituted C1 to C20 alkyl group, a substituted or unsubstituted C3 to C20 cycloalkyl group, and a substituted or unsubstituted C1 to C20 hydroxyalkyl group; optionally, $R_2$ comprises one or more of a C1 to C12 alkyl group, a C3 to C12 cycloalkyl group, and a C1 to C12 hydroxyalkyl group; and
the third structural unit is as shown in Formula (III):

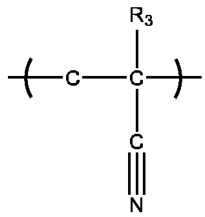

Formula (III);

in which,
$R_3$ comprises one or more of a hydrogen atom, and a substituted or unsubstituted C1 to C5 alkyl group; optionally, $R_3$ comprises one or more of a hydrogen atom, and a substituted or unsubstituted C1 to C3 alkyl group.

**9.** The separator as claimed in claim 8, wherein

based on a total molar amount of the first structural unit, the second structural unit, and the third structural unit, the first structural unit is present in a molar percentage, denoted as A%, of $0 < A \leq 20$; optionally, of $5 \leq A \leq 20$; and/or
based on a total molar amount of the first structural unit, the second structural unit, and the third structural unit, the second structural unit is present in a molar percentage, denoted as B%, of $60 \leq B < 100$; optionally, of $60 \leq B \leq 80$; and/or
based on a total molar amount of the first structural unit, the second structural unit, and the third structural unit, the third structural unit is present in a molar percentage, denoted as C%, of $0 < C \leq 20$; optionally, of $5 \leq C \leq 20$.

**10.** The separator as claimed in claim 8 or 9, wherein the organic silicon particles satisfy at least one of the following conditions (1) to (3):

(1)

$$3 \leq B/C \leq 16;$$

(2)

$$3 \leq B/A \leq 16;$$

or
(3)

$$B: C: A \text{ is } (12 \text{ to } 16):(1 \text{ to } 4):(1 \text{ to } 4)$$

in which the molar percentage of the first structural unit is denoted as A%, the molar percentage of the second structural unit is denoted as B%, the molar percentage of the third structural unit is denoted as C%, based on a total

molar amount of the first structural unit, the second structural unit, and the third structural unit.

**11.** The separator as claimed in any one of claims 1 to 10, wherein the organic silicon particles comprise a structural unit shown in formula (a):

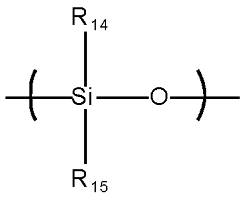

Formula (a);

in which,

$R_{14}$ and $R_{15}$ are each independently at least one selected from a hydrogen atom, a substituted or unsubstituted C1 to C10 alkyl group, a hydroxyl group, and an amino group; optionally, $R_{14}$ and $R_{15}$ are each independently at least one selected from a hydrogen atom, a substituted or unsubstituted C1 to C6 alkyl group, a hydroxyl group, and an amino group;

optionally, the organic silicon particles comprise one or more of polymethylsiloxane, polydimethylsiloxane, polydiethylsiloxane, polymethylhydroxysiloxane, polymethylaminosiloxane, and their respective derivatives.

**12.** The separator as claimed in any one of claims 1 to 11, wherein the materials that constitute the three-dimensional skeleton structure comprise at least one of filaments, rods, tubes, or bars.

**13.** The separator as claimed in any one of claims 1 to 12, wherein the materials that constitute the three-dimensional skeleton structure have an aspect ratio of 5 to 150, optionally of 20 to 100.

**14.** The separator as claimed in any one of claims 1 to 13, wherein the materials that constitute the three-dimensional skeleton structure comprise at least one of organic materials or inorganic materials;

optionally, the organic materials comprise at least one of nanocellulose, polytetrafluoroethylene nanofibers, or polyamide nanofibers; optionally, the nanocellulose comprises at least one of cellulose nanofibers, cellulose nanocrystals, or bacterial nanocellulose; and

optionally, the inorganic materials comprise at least one of halloysite nanotubes, nanorod-shaped alumina, nanorod-shaped boehmite, nanorod-shaped silica, or glass fibers.

**15.** The separator as claimed in any one of claims 1 to 14, wherein the materials that constitute the three-dimensional skeleton structure comprise nanocellulose, and the nanocellulose comprises at least one of unmodified nanocellulose or modified nanocellulose;

optionally, the modified nanocellulose comprises a modifying group, the modifying group comprises at least one of an amino group, a carboxyl group, an aldehyde group, a sulfonic acid group, a boric acid group, or a phosphoric acid group; optionally, at least one of a sulfonic acid group, a boric acid group, or a phosphoric acid group;

optionally, the modified nanocellulose comprises a hydroxyl group and a modifying group, and a molar ratio of the modifying group to the hydroxyl group is from 1:4 to 4:1, optionally from 2:3 to 7:3.

**16.** The separator as claimed in any one of claims 1 to 15, wherein the material that constitutes the three-dimensional skeleton structure comprise a sulfonic acid group, and the material that constitutes the three-dimensional skeleton structure have sulfur present in a content of ≥0.1wt%, optionally from 0.2 to 0.5wt%, based on the total weight of the material that constitutes the three-dimensional skeleton structure.

**17.** The separator as claimed in any one of claims 1 to 16, wherein the coating layer further comprises a non-granular binder;

optionally, the non-granular binder is present in the coating layer in a content of ≤5wt%, based on the total weight of the coating layer;

optionally, the non-granular binder comprises at least one of polyacrylonitrile, acrylic resins, acrylate resins,

polyvinyl alcohol, isobutylene-maleic anhydride copolymers, polyacrylamide, sodium carboxymethyl cellulose, carboxymethyl chitosan, sodium alginate, or their respective derivatives.

**18.** The separator as claimed in any one of claims 1 to 17, wherein

the porous substrate has a thickness of ≤6μm, optionally from 3 to 5μm; and/or
the coating layer has a thickness of ≤4μm, optionally from 0.4 to 3μm.

**19.** The separator as claimed in any one of claims 1 to 18, wherein the separator satisfies at least one of the following conditions (1) to (8):

(1) the separator has a longitudinal thermal shrinkage rate at 150°C for 1h of ≤4.5%, optionally from 0.8% to 3%;
(2) the separator has a traverse thermal shrinkage rate at 150°C for 1h of ≤4.5%, optionally from 1% to 3%;
(3) the separator has a longitudinal tensile strength of ≥1600kg/$cm^2$, optionally from 1800 to 4500kg/$cm^2$;
(4) the separator has a traverse tensile strength of ≥1600kg/$cm^2$, optionally from 1800 to 4500kg/$cm^2$;
(5) the separator has an infiltration length of ≥20mm, optionally from 30 to 80mm;
(6) the separator has an infiltration speed of ≥2mm/s, optionally from 3 to 10mm/s;
(7) the separator has an air permeability of ≤350s/100mL, optionally from 100 to 270s/100mL; or
(8) the separator has an ionic conductivity of ≥0.5mS/cm, optionally from 0.55 to 0.98mS/cm.

**20.** A method for preparing the separator as claimed in any one of claims 1 to 19, comprising the steps of: providing a porous substrate; formulating a coating layer slurry by blending organic silicon particles with a binder to obtain a mixture and then adding to the mixture materials that constitute a three-dimensional skeleton structure and a solvent and mixing the resulting mixture homogenously; and applying the coating slurry to at least one surface of the porous substrate followed by drying to obtain the separator, wherein the separator comprises the porous substrate and a coating layer disposed on at least one surface of the porous substrate, and the coating layer comprises the three-dimensional skeleton structure and organic silicon particles, and at least a portion of the organic silicon particles are filled into the three-dimensional skeleton structure.

**21.** A secondary battery, comprising the separator as claimed in any one of claims 1 to 19 and the separator prepared by the method as claimed in claim 20.

**22.** An electrical device, comprising the secondary battery as claimed in claim 21.

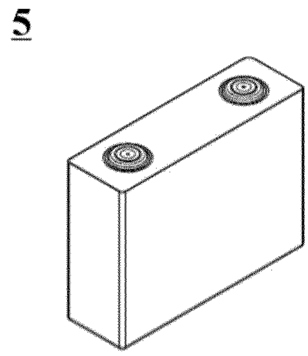


Fig. 1

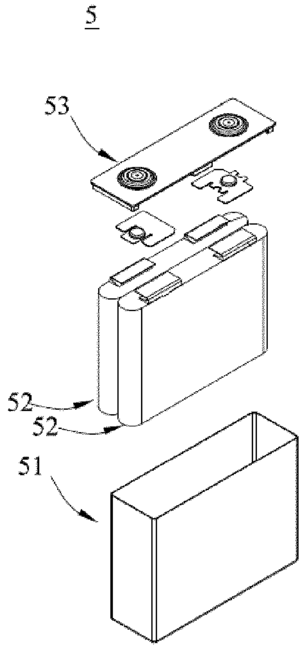


Fig. 2

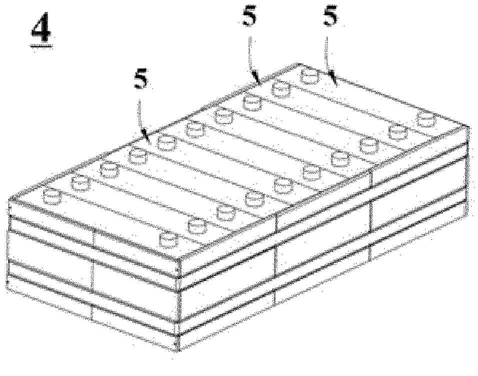


Fig. 3

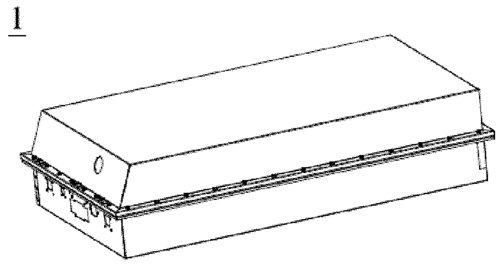


Fig. 4

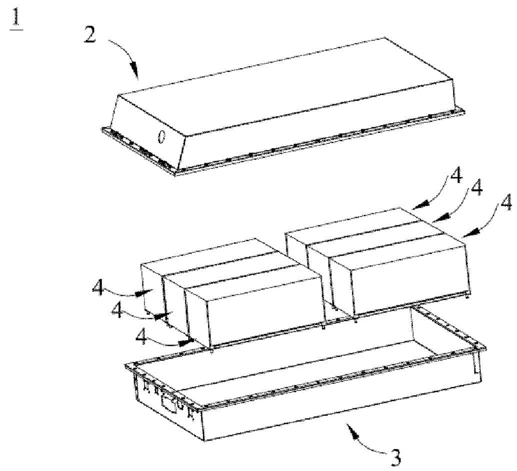


Fig. 5

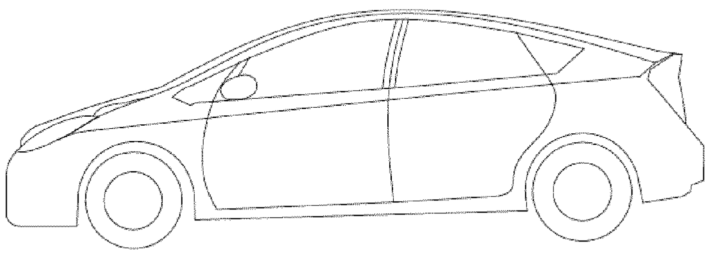

Fig. 6

**INTERNATIONAL SEARCH REPORT**

International application No. **PCT/CN2023/077454**

**A. CLASSIFICATION OF SUBJECT MATTER**

H01M 50/409(2021.01)i；H01M 10/0525(2010.01)i

According to International Patent Classification (IPC) or to both national classification and IPC

**B. FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 隔膜, 隔离膜, 隔板, 多孔, 涂覆, 涂层, 骨架, 有机硅, 聚倍半硅氧烷, 硅氧烷, separator, separat+, porous, coat+, skeleton, organic silicon, polysilsesquioxane, siloxane

**C. DOCUMENTS CONSIDERED TO BE RELEVANT**

| Category* | Citation of document, with indication, where appropriate, of the relevant passages | Relevant to claim No. |
|---|---|---|
| Y | CN 111164807 A (ATTACCATO LLC et al.) 15 May 2020 (2020-05-15) description, paragraphs 63-152 | 1-22 |
| Y | CN 102738504 A (SONY CORP.) 17 October 2012 (2012-10-17) description, paragraphs 11-47 and 116-139 | 1-22 |
| Y | CN 104979516 A (CONTEMPORARY AMPEREX TECHNOLOGY CO., LTD.) 14 October 2015 (2015-10-14) description, paragraphs 6-40 | 11-22 |

☐ Further documents are listed in the continuation of Box C. ☑ See patent family annex.

* Special categories of cited documents:
- “A” document defining the general state of the art which is not considered to be of particular relevance
- “D” document cited by the applicant in the international application
- “E” earlier application or patent but published on or after the international filing date
- “L” document which may throw doubts on priority claim(s) or which is cited to establish the publication date of another citation or other special reason (as specified)
- “O” document referring to an oral disclosure, use, exhibition or other means
- “P” document published prior to the international filing date but later than the priority date claimed
- “T” later document published after the international filing date or priority date and not in conflict with the application but cited to understand the principle or theory underlying the invention
- “X” document of particular relevance; the claimed invention cannot be considered novel or cannot be considered to involve an inventive step when the document is taken alone
- “Y” document of particular relevance; the claimed invention cannot be considered to involve an inventive step when the document is combined with one or more other such documents, such combination being obvious to a person skilled in the art
- “&” document member of the same patent family

| Date of the actual completion of the international search | Date of mailing of the international search report |
|---|---|
| **12 September 2023** | **30 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/077454**

| Patent document cited in search report | Publication date (day/month/year) | Patent family member(s) | Publication date (day/month/year) |
|---|---|---|---|
| CN 111164807 A | 15 May 2020 | EP 3691002 A1 | 05 August 2020 |
| | | EP 3691002 A4 | 30 June 2021 |
| | | KR 20210156334 A | 24 December 2021 |
| | | KR 102455272 B1 | 17 October 2022 |
| | | JPWO 2019064538 A1 | 10 September 2020 |
| | | JP 6956194 B2 | 02 November 2021 |
| | | WO 2019064538 A1 | 04 April 2019 |
| | | KR 20200046077 A | 06 May 2020 |
| | | KR 102344136 B1 | 29 December 2021 |
| | | US 2020251740 A1 | 06 August 2020 |
| | | IN 202047014888 A | 15 May 2020 |
| | | IN 388185 B | 04 February 2022 |
| CN 102738504 A | 17 October 2012 | JP 2012221824 A | 12 November 2012 |
| | | US 2012263994 A1 | 18 October 2012 |
| | | US 8795870 B2 | 05 August 2014 |
| | | CN 102738504 B | 12 April 2017 |
| CN 104979516 A | 14 October 2015 | CN 104979516 B | 03 August 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 190772016 T
- GB 195872017 T
- GB 245862009 T
- GB 245332009 T
- GB 60402019 T
- GB 363632018 T
- GB 1200832009 T